# EUROPÄISCHE PATENTSCHRIFT

(11) **EP 2 684 348 B1**
(45) Veröffentlichungstag und Bekanntmachung des Hinweises auf die Patenterteilung: **22.11.2017**
(21) Anmeldenummer: 12709514.9
(22) Anmeldetag: 08.03.2012
(51) Int. Cl.: H04M 11/06, H04L 5/14, H04L 29/06

(54) **VERFAHREN ZUM BETRIEB EINER DSL-LEITUNG IN EINEM TELEKOMMUNIKATIONSNETZ, ZUGANGSKNOTENGERÄT UND ANSCHLUSSGERÄT**
METHOD FOR OPERATING A DSL LINE IN A TELECOMMUNICATION NETWORK, ACCESS NODE DEVICE AND CONNECTION DEVICE
PROCÉDÉ DE FONCTIONNEMENT D'UNE LIGNE DSL DANS UN RÉSEAU DE TÉLÉCOMMUNICATION, NOEUD D'ACCÈS ET APPAREIL DE RACCORDEMENT

(30) Priorität: 10.03.2011 EP 11001987; 10.03.2011 US 201161451233 P
(43) Veröffentlichungstag der Anmeldung: 15.01.2014
(73) Patentinhaber: Deutsche Telekom AG, 53113 Bonn (DE)
(72) Erfinder: HAAG, Thomas, 63110 Rodgau (DE); BERNDT, Eva, 64404 Bickenbach (DE); WUEST, Stefan, 64839 Münster (DE); KORTE, Michael, 64832 Babenhausen (DE)
(74) Vertreter: Schwöbel, Thilo K.
(86) Internationale Anmeldenummer: PCT/EP2012/001031
(87) Internationale Veröffentlichungsnummer: WO 2012/119773

(56) Entgegenhaltungen:
- EP-A1- 2 237 470
- WO-A1-2009/123541

## Beschreibung

### Stand der Technik

Die vorliegende Erfindung geht aus von einem Verfahren zum Betrieb einer DSL-Leitung (digital subscriber line - Leitung) in einem Telekommunikationsnetz, wobei die DSL-Leitung zwischen einem netzseitigen Zugangsknotengerät und einem teilnehmerseitigen Anschlussgerät zur Übertragung von Nutzdaten und Signalisierungsinformationen vorgesehen ist. Allgemein betrifft die Erfindung DSL-Sende- und -Empfangsvorrichtungen und diese betreffende Betriebs- und Steuerungsverfahren.

In solchen Anschluss- bzw. Zugangsknotengeräten bzw. generell DSL-Geräten oder Kommunikationsvorrichtungen, wie z. B. DSL-Transceiver bzw. DSL-Sende- und Empfangsvorrichtungen, ist es bekannt, verschiedene Energiemodi zu verwenden, um in einer Situation, in welcher nicht die volle Kapazität der beteiligten Geräte einer DSL-Leitung benötigt wird, das Sparen von Energie zu ermöglichen. Zum Beispiel sind gemäß einer ADSL2-Spezifikation (ADSL: Asymmetric Digital Subscriber Line) ITU-T G.992.3, drei verschiedene Betriebsmodi bzw. Energiemodi vorgesehen, welche als L0 (erster Betriebsmodus bzw. "showtime", d.h. das physikalische Übertragungsmedium ist aktiv), L2 (zweiter Betriebsmodus mit reduzierter Leistungsaufnahme durch stand by) und L3 (dritter Betriebsmodus bzw. "silent" mit inaktivem Anschluss) bezeichnet werden. In dem L0-Zustand wird das DSL-Gerät mit voller Leistung betrieben, d. h. Betriebsparameter des Transceivers werden entsprechend einer maximal zulässigen Bitrate bzw. einer vorgegebenen ersten Datenübertragungsrate eingestellt. Die maximal zulässige Bitrate kann durch die Fähigkeiten des Transceivers, durch Eigenschaften eines mit dem Transceiver verbundenen physikalischen Kommunikationsmediums oder durch Regeln des Netzbetreibers eingeschränkt sein. Im L2-Zustand werden die Betriebsparameter des DSL-Geräts eingestellt, um die Bitrate im Vergleich zu dem L0-Zustand zu reduzieren, d.h. eine vorgegebene zweite und (gegenüber der ersten Datenübertragungsrate) reduzierte Datenübertragungsrate. Im L3-Zustand, auch als Leerlaufzustand bezeichnet, wird der Transceiver abgeschaltet, was bedeutet, dass in diesem Zustand die Übertragung von Daten nicht möglich ist.

WO 2009/123431 A1 beschreibt ein Verfahren zum Betrieb einer DSL-Leitung mit energiesparenden Betriebsmodi L2, L3.

Durch die Möglichkeit verschiedene Betriebsmodi zur Verfügung zustellen, ist es möglich, dass insgesamt innerhalb des Telekommunikationsnetzes Energie eingespart wird.

Gängige Praxis ist es im breitbandigen Zugangsnetz derzeit, Sprachdaten zwischen Dienstknoten und Zugangsmultiplexern zu signalisieren und zu übertragen. Hierbei erfolgt die Sprachübertragung beispielsweise mittels RTP-Protokoll (realtime transport protocol) über IP (internet protocol) und die Signalisierung über das SIP-Protokoll (session initiation protocol). Die auf höheren Ebenen des OSI-Schichtenmodells angeordneten Anwendungen bzw. Applikationen erwarten, dass der Übertragungskanal die notwendige Bandbreite (d.h. die benötigte Datenübertragungsrate) zur Verfügung stellt.

Der oben genannte DSL-Mechanismus zur Stromeinsparung ist bei bekannten Lösungen als autonomer Mechanismus ausgeführt, der in Abhängigkeit des Füllstandes eines zugehörigen Zwischenspeichers (bzw. Puffers) die Datenübertragungsrate regelt, d.h. den ersten Betriebsmodus einstellt, wenn eine höhere Datenübertragungsrate erforderlich ist als eine vorgegebene Schwelle, und den zweiten (oder dritten) Betriebsmodus einstellt, wenn lediglich eine niedrigere Datenübertragungsrate (oder keinen Datenübertragungsbedarf) erforderlich ist. Dieser DSL-Mechanismus erfolgt ausschließlich im DSL-Chip und ohne externen Trigger oder ohne externe Steuerung. Insbesondere ist es bei bekannten DSL-Stromsparmechanismen nicht vorgesehen, dass etwa Informationen eines Protokollfilters oder einer zugehörigen Applikation berücksichtigt werden. Hierdurch ist es beim Stand der Technik in nachteiliger Weise nicht gewährleistet, dass für die Sprachübertragung mittels RTP rechtzeitig die notwendige Bandbreite (bzw. Datenübertragungsrate) zur Verfügung steht. Ferner ist es beim Stand der Technik nachteilig, dass bei DSL der Regelmechanismus nur in der Richtung nach unten (downstream) wirkt, d.h. in der Richtung von einem netzseitigen Knoten zu einem teilnehmerseitigen Knoten.

Der Erfindung liegt die Aufgabe zugrunde, ein Verfahren bereitzustellen, das in diesem Zusammenhang eine einfache und sichere Möglichkeit zur Verfügung stellt, einerseits in effizienter Weise eine Stromeinsparung dadurch zu bewirken, dass DSL-Komponenten möglichst lange in einem energiesparenden Zustand eingestellt sind, andererseits aber auch dafür zu sorgen, dass durch die Einstellung von stromsparenden Betriebsmodi keine Einschränkungen für einen Benutzer resultieren bzw. solche Einschränkungen möglichst gering ausfallen, insbesondere keine oder nur kurze Verzögerungszeiten entstehen, bis benötigte DSL-Geräte bzw. DSL-Komponenten wieder in einen Betriebszustand geschaltet sind, in dem eine vergleichsweise hohe Datenübertragungsrate realisiert ist.

### Offenbarung der Erfindung

Diese Aufgabe wird gelöst durch ein Verfahren zum Betrieb einer DSL-Leitung (digital subscriber line - Leitung) in einem Telekommunikationsnetz, wobei die DSL-Leitung zwischen einem netzseitigen Zugangsknotengerät und einem teilnehmerseitigen Anschlussgerät zur Übertragung von Nutzdaten und Signalisierungsinformationen vorgesehen ist, wobei das Zugangsknotengerät, das Anschlussgerät sowie die DSL-Leitung alternativ in einem ersten Betriebsmodus oder in einem zweiten Betriebsmodus oder in einem dritten Betriebsmodus betreibbar ist, wobei das Zugangsknotengerät, das Anschlussgerät sowie die DSL-Leitung im ersten Betriebsmodus eine vorgegebene erste Datenübertragungsrate aufweist, wobei das Zugangsknotengerät, das Anschlussgerät sowie die DSL-Leitung im zweiten Betriebsmodus eine vorgegebene zweite, reduzierte Datenübertragungsrate aufweist, wobei das Zugangsknotengerät, das Anschlussgerät sowie die DSL-Leitung im dritten Betriebsmodus zumindest teilweise ausgeschaltet sind, wobei die Einstellung des ersten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät und das Anschlussgerät sowie die DSL-Leitung im zweiten Betriebsmodus befinden und
-- das Zugangsknotengerät und/oder das Anschlussgerät eine Signalisierungsinformation zum Aufbau einer vorgegebenen, einen Datenübertragungsbedarf mit erhöhter Datenübertragungsrate benötigende Datenverbindung empfängt,
   wobei die Einstellung des ersten oder zweiten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät, das Anschlussgerät sowie die DSL-Leitung im dritten Betriebsmodus befinden und
-- das Zugangsknotengerät und/oder das Anschlussgerät eine Signalisierungsinformation zum Aufbau einer vorgegebenen, einen Datenübertragungsbedarf mit erhöhter Datenübertragungsrate benötigende Datenverbindung empfängt,
wobei das Anschlussgerät eine erste Erkennereinheit aufweist oder dem Anschlussgerät eine erste Erkennereinheit zugeordnet ist, wobei das Zugangsknotengerät eine zweite Erkennereinheit aufweist oder dem Zugangsknotengerät eine zweite Erkennereinheit zugeordnet ist, wobei mittels der ersten Erkennereinheit und/oder mittels der zweiten Erkennereinheit durch einen Vergleich der empfangenen Signalisierungsinformation mit einer vorbestimmten Referenzinformation detektiert wird, ob ein Datenübertragungsbedarf einer erhöhten Datenübertragungsrate erwartet wird,
wobei die vorgegebene Datenverbindung eine teilnehmerseitig initiierte Datenverbindung ist und mittels der ersten Erkennereinheit erkannt wird oder wobei die vorgegebene Datenverbindung eine teilnehmerseitig terminierte Datenverbindung ist und mittels der zweiten Erkennereinheit erkannt wird.

Diese Aufgabe wird weiterhin alternativ auch gelöst durch ein Verfahren zum Betrieb einer DSL-Leitung (digital subscriber line - Leitung) in einem Telekommunikationsnetz, wobei die DSL-Leitung zwischen einem netzseitigen Zugangsknotengerät und einem teilnehmerseitigen Anschlussgerät zur Übertragung von Nutzdaten und Signalisierungsinformationen vorgesehen ist, wobei das Zugangsknotengerät, das Anschlussgerät sowie die DSL-Leitung alternativ in einem ersten Betriebsmodus oder in einem zweiten Betriebsmodus betreibbar ist, wobei das Zugangsknotengerät, das Anschlussgerät sowie die DSL-Leitung im ersten Betriebsmodus eine vorgegebene erste Datenübertragungsrate aufweist, wobei das Zugangsknotengerät, das Anschlussgerät sowie die DSL-Leitung im zweiten Betriebsmodus eine vorgegebene zweite, reduzierte Datenübertragungsrate aufweist, wobei die Einstellung des ersten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät und das Anschlussgerät sowie die DSL-Leitung im zweiten Betriebsmodus befinden und
-- das Zugangsknotengerät und/oder das Anschlussgerät eine Signalisierungsinformation zum Aufbau einer vorgegebenen, einen Datenübertragungsbedarf mit erhöhter Datenübertragungsrate benötigende Datenverbindung empfängt.

Erfindungsgemäß in vorteilhafter Weise möglich, dass einerseits in effizienter Weise eine Stromeinsparung bewirkt wird, weil DSL-Komponenten möglichst lange in einem energiesparenden Zustand eingestellt sind. Weiterhin ist es hierdurch aber auch möglich, dass durch die Einstellung von stromsparenden Betriebsmodi keine Einschränkungen für einen Benutzer resultieren bzw. solche Einschränkungen möglichst gering ausfallen, insbesondere keine oder nur kurze Verzögerungszeiten entstehen, bis benötigte DSL-Geräte bzw. DSL-Komponenten wieder in einen Betriebszustand geschaltet sind, in dem eine vergleichsweise hohe Datenübertragungsrate realisiert ist.

Es wird also gemäß der vorliegenden Erfindung die Benutzerfreundlichkeit bei der Verwendung von energiesparenden DSL-Komponenten bzw. DSL-Geräten (wie Anschlussgerät bzw. Zugangsknotengerät) für einen Benutzer einer Telekommunikationsdienstleistung - etwa ein Telefongespräch über eine VoIP (Voice over IP) Verbindung - dadurch erhöht, dass bereits in der Signalisierungsphase (d.h. in Abwesenheit eines momentan vorliegenden Datenübertragungsbedarfs) ein "Aufweckereignis" an den physikalischen Übertragungskanal gesendet wird, so dass der DSL-Chip bereits frühzeitig aus einem energiesparenden (zweiten oder dritten) Betriebsmodus aufgeweckt wird (d.h. in den ersten Betriebsmodus eingestellt wird, in dem der DSL-Chip vorher nicht eingestellt war), so dass die notwendige Bandbreite für die nachgesuchte Telekommunikationsdienstleistung - insbesondere eine Sprachübertragung - rechtzeitig zur Verfügung steht, wenn der Nutzdatenstrom z.B. über RTP (realtime transport protocol) angelegt wird.

Erfindungsgemäß ist vorgesehen, dass die DSL-Leitung den ersten zweiten und dritten Betriebsmodus einnehmen kann. Alternativ kann es erfindungsgemäß auch vorgesehen sein, dass die DSL-Leitung lediglich den ersten und zweiten Betriebsmodus einnehmen kann.

Erfindungsgemäß wird eine (Signalisierungs-)protokollabhängige DSL-Leistungseinstellung realisiert. Dieser protokollabhängige DSL-Leistungseinstellung erfolgt erfindungsgemäß bevorzugt sowohl für den teilnehmerseitig initiierten Fall (d.h. den sog. upstream-Fall, in dem ein Verbindungswunsch von einem Teilnehmer bzw. dessen Anschlussgerät ausgeht und netzwerkseitig weitergeleitet wird, so dass die DSL-Verbindung ausgehend von der Teilnehmerseite aktiviert werden muss) als auch für den teilnehmerseitig terminierten Fall (d.h. den sog. downstream-Fall, in dem ein Verbindungswunsch (beispielsweise von einem anderen, hier nicht betrachteten Teilnehmer ausgehend) vom Telekommunikationsnetz an den betrachteten Teilnehmer bzw. dessen Anschlussgerät geleitet wird, so dass die DSL-Verbindung ausgehend von der Netzseite aktiviert werden muss).

Die vorliegende Erfindung ermöglicht in vorteilhafter Weise die Reduktion der Leistung und Anzahl der bei der DSL-Leitung (in einem leistungsreduzierten (zweiten) Betriebsmodus) verwendeten Träger bis zu einer minimalen Datenrate von beispielsweise 128 kbit/s und (in einem zumindest teilweise ausgeschalteten (dritten) Betriebsmodus) das Abschalten der DSL-Leitung zumindest hinsichtlich der Sendeleistung im dritten Betriebsmodus. Im Zustand des zweiten Betriebsmodus, in dem kein Sprachverkehr und keine Rufsignalisierung erfolgen, ist die verfügbare Datenrate soweit reduziert, dass gerade noch eine Anrufsignalisierung, z.B. eine SIP invite Nachricht, übertragen werden kann. Im Zustand des dritten Betriebsmodus steht über die DSL-Leitung keine Bandbreite mehr für Nutzdaten zur Verfügung, d.h. es kann auch kein Sprachverkehr und keine Rufsignalisierung (bspw. über eine SIP invite Nachricht) erfolgen, sondern es ist lediglich noch die Übertragung von solchen Steuersignalen möglich, die spezifisch sind für die DSL-Leitung, beispielsweise Steuersignale zum "Aufwecken" der Gegenstelle, etwa als ein Pilotton. Dadurch wird es möglich, gerade bei Anschlüssen, die primär der Sprachübertragung dienen (sogenannte Single Play Anschlüsse), durch Einführung eines Ruhezustands (welcher sowohl dem zweiten oder dem dritten Betriebsmodus entsprechen kann), verbunden mit einer Rufdatenabhängigen Signalisierung und "Aufwecken" des Anschlusses, diesen in einen stromsparenden Zustand bzw. Ruhezustand (zweiter oder dritter Betriebsmodus) zu versetzen und bedarfsgerecht durch Überwachen der Rufdatensignalisierung wieder in einen aktiven (bzw. aktiveren) Modus (beispielsweise der erste Betriebsmodus) zur Datenübertragung zu schalten.

Das dezidierte Überwachen der Rufsignalisierung (bzw. der Signalisierung weiterer Dienste, die einen erhöhten Bandbreitenbedarf aufweisen) sowohl im sog. upstream-Fall (d.h. teilnehmerseitig initiiert) als auch im sog. downstream-Fall (d.h. teilnehmerseitig terminiert) hat den Vorteil, dass der Anschluss nur auf ein entsprechendes (überwachtes) Signal - beispielsweise eine VoIP-Signalisierung - reagiert und nicht auf eine beliebige Nachricht wie zum Beispiel IPCP bzw. Ping.

Erfindungsgemäß ist es besonders bevorzugt, wenn das Zugangsknotengerät, das Anschlussgerät sowie die DSL-Leitung alternativ in einem dritten Betriebsmodus betreibbar ist, wobei das Zugangsknotengerät, das Anschlussgerät sowie die DSL-Leitung im dritten Betriebsmodus zumindest teilweise ausgeschaltet sind, wobei die Einstellung des ersten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät, das Anschlussgerät sowie die DSL-Leitung im zweiten oder dritten Betriebsmodus befinden und
-- das Zugangsknotengerät und/oder das Anschlussgerät eine Signalisierungsinformation zum Aufbau einer vorgegebenen, einen Datenübertragungsbedarf mit erhöhter Datenübertragungsrate benötigende Datenverbindung empfängt.

Hierdurch ist es aufgrund der Möglichkeit des dritten Betriebsmodus in vorteilhafter Weise möglich, dass in noch größerem Maße beim Betrieb der DSL-Komponenten bzw. DSL-Geräte Energie eingespart wird, ohne dass dies in einer Verminderung des Komforts bei einem Nutzer der Telekommunikationsdienstleistung resultiert.

Erfindungsgemäß ist es ferner besonders bevorzugt, dass die Einstellung des ersten Betriebsmodus in Abwesenheit eines momentan vorliegenden Datenübertragungsbedarfs einer erhöhten Datenübertragungsrate ausschließlich vom zweiten Betriebsmodus erfolgt.

Hierdurch kann die Änderung des Betriebsmodus der DSL-Geräte bzw. DSL-Komponenten beim Betrieb der DSL-Leitung vergleichsweise einfach implementiert werden, weil als mögliche Übergänge von Betriebsmodi (während des Aufweckens von DSL-Geräten) lediglich ein Übergang vom zweiten Betriebsmodus in den ersten Betriebsmodus und vom dritten Betriebsmodus in den zweiten Betriebsmodus vorgesehen ist.

In einer hierzu alternativen Ausführung der vorliegenden Erfindung kann es auch vorgesehen sein, dass die Einstellung des ersten Betriebsmodus in Abwesenheit eines momentan vorliegenden Datenübertragungsbedarfs einer erhöhten Datenübertragungsrate direkt vom dritten Betriebsmodus aus erfolgt.

Gemäß einer ersten erfindungsgemäßen Ausführungsform der vorliegenden Erfindung ist es vorgesehen, dass das Anschlussgerät eine erste Erkennereinheit aufweist oder dem Anschlussgerät eine erste Erkennereinheit zugeordnet ist, wobei das Zugangsknotengerät eine zweite Erkennereinheit aufweist oder dem Zugangsknotengerät eine zweite Erkennereinheit zugeordnet ist, wobei mittels der ersten Erkennereinheit oder mittels der zweiten Erkennereinheit durch einen Vergleich der empfangenen Signalisierungsinformation mit einer vorbestimmten Referenzinformation detektiert wird, ob ein Datenübertragungsbedarf einer erhöhten Datenübertragungsrate erwartet wird.

Hierdurch kann erfindungsgemäß in effizienter Weise aufgrund von durch die erste Erkennereinheit oder durch die zweite Erkennereinheit detektierten Signalisierungsinformationen erkannt werden, dass die Wahrscheinlichkeit einer relativ kurzfristig nachgefragten erhöhten Datenübertragungsrate vergleichsweise hoch ist und es daher im Sinne einer möglichst verzögerungsfreien Erbringung der nachgefragten Telekommunikationsdienstleistung sinnvoll ist das Anschlussgerät und in der Folge auch das Zugangsknotengerät oder aber das Zugangsknotengerät und in der Folge auch das Anschlussgerät aufzuwecken, d.h. beispielsweise in den ersten Betriebsmodus einzustellen.

Ferner ist es gemäß der ersten erfindungsgemäßen Ausführungsform bevorzugt vorgesehen, dass die vorgegebene Datenverbindung eine teilnehmerseitig initiierte Datenverbindung ist und mittels der ersten Erkennereinheit erkannt wird und/oder dass die vorgegebene Datenverbindung eine teilnehmerseitig terminierte Datenverbindung ist und mittels der zweiten Erkennereinheit erkannt wird.

Hierdurch ist es gemäß der ersten erfindungsgemäßen Ausführungsform vorteilhaft möglich, dass die DSL-Leitung gemäß dem dritten Betriebsmodus ausgeschaltet werden kann, so dass eine größere Energieeinsparung realisiert werden kann. Ferner ist hierdurch in vorteilhafter Weise gewährleistet, dass sowohl für teilnehmerseitig initiierte als auch für teilnehmerseitig terminierte Datenverbindungen das erfindungsgemäße Aufweckverfahren angewendet werden kann.

Die Benutzung der ersten erfindungsgemäßen Ausführungsform ist insbesondere unter Verwendung einer reinen IP Verbindung (ohne den Einsatz von PPP (Point-to-point Protocol)) bevorzugt. Bei einer reinen IP-Verbindung, zum Beispiel in einem IPv4 (Internet Protocol Version 4) oder IPv6 (Internet Protocol Version 6) basierten Netz, wobei IPv6 bevorzugt ist, sind die Adressen der Endpunkte (Anschlussgeräte) vorbestimmt und damit bekannt, so dass sie nicht ausgehandelt werden müssen und eine PPP Session entfallen kann.

Erfindungsgemäß kann es gemäß der ersten erfindungsgemäßen Ausführungsform bevorzugt vorgesehen sein,
-- dass die vorgegebene Datenverbindung eine teilnehmerseitig initiierte Datenverbindung oder eine teilnehmerseitig terminierte Datenverbindung ist und beide Fälle der vorgegebenen Datenverbindung mittels der ersten Erkennereinheit erkannt werden, wenn sich das Zugangsknotengerät, das Anschlussgerät sowie die DSL-Leitung im ersten oder zweiten Betriebsmodus befinden,
   oder alternativ
-- dass die vorgegebene Datenverbindung eine teilnehmerseitig initiierte Datenverbindung oder eine teilnehmerseitig terminierte Datenverbindung ist und beide Fälle der vorgegebenen Datenverbindung mittels der zweiten Erkennereinheit erkannt werden, wenn sich das Zugangsknotengerät, das Anschlussgerät sowie die DSL-Leitung im ersten oder zweiten Betriebsmodus befinden.

Erfindungsgemäß kann es gemäß der ersten erfindungsgemäßen Ausführungsform und gemäß einer weiteren Ausführungsform bevorzugt vorgesehen sein, dass das Anschlussgerät eine erste Portreplikatorfunktionalität und/oder das Zugangsknotengerät eine zweite Portreplikatorfunktionalität aufweist. Hierdurch kann in vorteilhafter Weise in Pausenzeiten, d.h. in solchen Zeiten, in denen der Übertragungsbedarf über die DSL-Leitung entweder sehr gering ist oder aber sogar gänzlich verschwindet, Strom für den Betrieb von Komponenten der DSL-Leitung dadurch eingespart werden, dass ein Aufweckereignis durch den Portreflektor (bzw. den ersten und/oder zweiten Portreflektor) bzw. durch die erste und/oder zweite Portreflektorfunktionalität vermieden wird.

Gemäß einer alternativen Ausführungsform der vorliegenden Erfindung ist es vorgesehen, dass das Anschlussgerät eine erste Erkennereinheit aufweist oder dem Anschlussgerät eine erste Erkennereinheit zugeordnet ist, wobei mittels der ersten Erkennereinheit durch einen Vergleich der empfangenen Signalisierungsinformation mit einer vorbestimmten Referenzinformation detektiert wird, ob ein Datenübertragungsbedarf einer erhöhten Datenübertragungsrate erwartet wird.

Hierdurch kann erfindungsgemäß in effizienter Weise aufgrund von Signalisierungsinformationen erkannt werden, dass die Wahrscheinlichkeit einer relativ kurzfristig nachgefragten erhöhten Datenübertragungsrate vergleichsweise hoch ist und es daher im Sinne einer möglichst verzögerungsfreien Erbringung der nachgefragten Telekommunikationsdienstleistung sinnvoll ist das Anschlussgerät und in der Folge auch das Zugangsknotengerät aufzuwecken, d.h. beispielsweise in den ersten Betriebsmodus einzustellen.

Ferner ist es gemäß der alternativen Ausführungsform bevorzugt vorgesehen, dass die vorgegebene Datenverbindung eine teilnehmerseitig initiierte Datenverbindung oder eine teilnehmerseitig terminierte Datenverbindung ist und beide Fälle der vorgegebenen Datenverbindung mittels der ersten Erkennereinheit erkannt werden.

Hierdurch ist es erfindungsgemäß vorteilhaft möglich, dass die Erkennereinheit lediglich am Anschlussgerät vorhanden sein muss und nicht zwingend am Zugangsknotengerät.

Erfindungsgemäß ist es ebenfalls gemäß der alternativen Ausführungsform bevorzugt vorgesehen, dass ein Ausschalten der DSL-Leitung gemäß dem dritten Betriebsmodus verhindert wird.

Hierdurch ist gewährleistet, dass auch für teilnehmerseitig terminierte Datenverbindungen - d.h. solche, die vom Zugangsknotengerät aus dem Anschlussgerät signalisiert werden - das erfindungsgemäße Aufweckverfahren angewendet werden kann.

Die Benutzung der alternativen Ausführungsform ist insbesondere unter Verwendung einer beliebigen IP-Verbindung bevorzugt, beispielsweise eine PPP (Point-to-point Protocol) Session.

Gemäß sowohl der ersten als auch der alternativen Ausführungsform der vorliegenden Erfindung ist es ferner bevorzugt vorgesehen, dass die Referenzsignalisierung eine SIP-invite-Nachricht (Session Initiation Protocol invite) einer aufzubauenden VoIP-Verbindung (Voice over IP) umfasst.

Die Referenzsignalisierung kann jedoch auch mittels einer anderen Art von Siginalisierungsprotokoll realisiert werden, insbesondere
-- ARP (Address Resolution Protocol) bei IPv4 oder,
-- ND (Neighbour Discovery) Prozess bei IPv6 oder,
-- IGMP (IP Group Management Protocol) join/leave bei IPv4 oder,
-- MLD (Multicast Listener Discovery) bei IPv6..

Ferner ist es erfindungsgemäß bevorzugt möglich, dass für andere Telekommunikationsdienste als VoIP das erfindungsgemäße Verfahren angewandt wird, beispielsweise für Multicast/IPTV (Internet Protocol Television) und M2M (Machine to Machine Communication).

Ebenfalls gemäß sowohl der ersten als auch der alternativen Ausführungsform der vorliegenden Erfindung ist es ferner bevorzugt vorgesehen, dass die Einstellung des zweiten oder dritten Betriebsmodus für den Fall vorgesehen ist, dass
-- sich das Zugangsknotengerät, das Anschlussgerät sowie die DSL-Leitung im ersten Betriebsmodus befinden und
-- während einer vorgegebenen Zeitdauer kein Datenübertragungsbedarf oder ein vergleichsweise geringer Datenübertragungsbedarf detektiert wurde.

Erfindungsgemäß ist es vorgesehen, dass durch die erste Erkennereinheit bzw. durch die zweite Erkennereinheit ein Vergleich der empfangenen Signalisierungsinformation mit einer vorbestimmten Referenzinformation durchgeführt wird und mittels des Vergleichsergebnisses detektiert wird, ob ein Datenübertragungsbedarf einer erhöhten Datenübertragungsrate (als die momentan auf der DSL-Leitung gemäß dem zweiten Betriebsmodus bzw. dem dritten Betriebsmodus vorgesehene Datenübertragungsrate) erwartet wird. Hierbei kann es sich bei der Signalisierungsinformation bevorzugt um eine Signalisierungsnachricht handeln, wobei der Vergleich mit der Referenzinformation beispielsweise
-- ein Stringvergleich (d.h. ein Vergleich von Zeichenketten) mit einem Referenzstring (d.h. einer Referenzzeichenkette) und/oder
-- ein Vergleich mit einer Referenzadresse, insbesondere einer IP-Adresse umfasst.

Erfindungsgemäß ist die Referenzinformation insbesondere eine Information, die auf eine VoIP-Verbindung hinweist, nachfolgend auch als VoIP Referenzsignalisierung bezeichnet.

Gegenstand der vorliegenden Erfindung ist neben dem Verfahren zum Betrieb einer DSL-Leitung auch ein Anschlussgerät zum teilnehmerseitigen Anschluss an eine DSL-Leitung in einem Telekommunikationsnetz, wobei die DSL-Leitung zwischen einem netzseitigen Zugangsknotengerät und dem Anschlussgerät zur Übertragung von Nutzdaten und Signalisierungsinformationen vorgesehen ist,
wobei das Zugangsknotengerät, das Anschlussgerät sowie die DSL-Leitung alternativ in einem ersten Betriebsmodus oder in einem zweiten Betriebsmodus betreibbar ist, wobei das Zugangsknotengerät, das Anschlussgerät sowie die DSL-Leitung im ersten Betriebsmodus eine vorgegebene erste Datenübertragungsrate aufweist,
wobei das Zugangsknotengerät, das Anschlussgerät sowie die DSL-Leitung im zweiten Betriebsmodus eine vorgegebene zweite, reduzierte Datenübertragungsrate aufweist, wobei das Anschlussgerät derart konfiguriert ist, dass die Einstellung des ersten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät, das Anschlussgerät sowie die DSL-Leitung im zweiten Betriebsmodus befinden und
-- das Zugangsknotengerät und/oder das Anschlussgerät eine Signalisierungsinformation zum Aufbau einer vorgegebenen, einen Datenübertragungsbedarf mit erhöhter Datenübertragungsrate benötigende Datenverbindung empfängt.

Gegenstand der vorliegenden Erfindung ist neben dem Verfahren zum Betrieb einer DSL-Leitung auch ein Anschlussgerät zum teilnehmerseitigen Anschluss an eine DSL-Leitung in einem Telekommunikationsnetz, wobei die DSL-Leitung zwischen einem netzseitigen Zugangsknotengerät und dem Anschlussgerät zur Übertragung von Nutzdaten und Signalisierungsinformationen vorgesehen ist,
wobei das Zugangsknotengerät, das Anschlussgerät sowie die DSL-Leitung alternativ in einem ersten Betriebsmodus oder in einem zweiten Betriebsmodus oder in einem dritten Betriebsmodus betreibbar ist,
wobei das Zugangsknotengerät, das Anschlussgerät sowie die DSL-Leitung im ersten Betriebsmodus eine vorgegebene erste Datenübertragungsrate aufweist, wobei das Zugangsknotengerät, das Anschlussgerät sowie die DSL-Leitung im zweiten Betriebsmodus eine vorgegebene zweite, reduzierte Datenübertragungsrate aufweist, wobei das Zugangsknotengerät, das Anschlussgerät sowie die DSL-Leitung im dritten Betriebsmodus zumindest teilweise ausgeschaltet sind, wobei das Anschlussgerät derart konfiguriert ist, dass die Einstellung des ersten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät, das Anschlussgerät sowie die DSL-Leitung im zweiten Betriebsmodus befinden und
-- das Zugangsknotengerät und/oder das Anschlussgerät eine Signalisierungsinformation zum Aufbau einer vorgegebenen, einen Datenübertragungsbedarf mit erhöhter Datenübertragungsrate benötigende Datenverbindung empfängt,
   wobei das Anschlussgerät derart konfiguriert ist, dass die Einstellung des ersten oder zweiten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät, das Anschlussgerät sowie die DSL-Leitung im dritten Betriebsmodus befinden und
-- das Zugangsknotengerät und/oder das Anschlussgerät eine Signalisierungsinformation zum Aufbau einer vorgegebenen, einen Datenübertragungsbedarf mit erhöhter Datenübertragungsrate benötigende Datenverbindung empfängt,
wobei das Anschlussgerät eine erste Erkennereinheit aufweist oder dem Anschlussgerät eine erste Erkennereinheit zugeordnet ist, wobei das Zugangsknotengerät eine zweite Erkennereinheit aufweist oder dem Zugangsknotengerät eine zweite Erkennereinheit zugeordnet ist, wobei das Anschlussgerät derart konfiguriert ist, dass mittels der ersten Erkennereinheit und/oder mittels der zweiten Erkennereinheit durch einen Vergleich der empfangenen Signalisierungsinformation mit einer vorbestimmten Referenzinformation detektiert wird, ob ein Datenübertragungsbedarf einer erhöhten Datenübertragungsrate erwartet wird,
wobei das Zugangsknotengerät derart konfiguriert ist, dass die vorgegebene Datenverbindung eine teilnehmerseitig initiierte Datenverbindung ist und mittels der ersten Erkennereinheit erkannt wird oder wobei das Anschlussgerät derart konfiguriert ist, dass die vorgegebene Datenverbindung eine teilnehmerseitig terminierte Datenverbindung ist und mittels der zweiten Erkennereinheit erkannt wird.

Weiterhin ist - neben dem Verfahren zum Betrieb einer DSL-Leitung gemäß der vorliegenden Efindung - Gegenstand der vorliegenden Erfindung auch ein Zugangsknotengerät zum netzseitigen Anschluss an eine DSL-Leitung in einem Telekommunikationsnetz, wobei die DSL-Leitung zwischen dem Zugangsknotengerät und einem teilnehmerseitigen Anschlussgerät zur Übertragung von Nutzdaten und Signalisierungsinformationen vorgesehen ist,
wobei das Zugangsknotengerät, das Anschlussgerät sowie die DSL-Leitung alternativ in einem ersten Betriebsmodus oder in einem zweiten Betriebsmodus betreibbar ist, wobei das Zugangsknotengerät, das Anschlussgerät sowie die DSL-Leitung im ersten Betriebsmodus eine vorgegebene erste Datenübertragungsrate aufweist, wobei das Zugangsknotengerät, das Anschlussgerät sowie die DSL-Leitung im zweiten Betriebsmodus eine vorgegebene zweite, reduzierte Datenübertragungsrate aufweist, wobei das Zugangsknotengerät derart konfiguriert ist, dass die Einstellung des ersten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät, das Anschlussgerät sowie die DSL-Leitung im zweiten Betriebsmodus befinden und
-- das Zugangsknotengerät und/oder das Anschlussgerät eine Signalisierungsinformation zum Aufbau einer vorgegebenen, einen Datenübertragungsbedarf mit erhöhter Datenübertragungsrate benötigende Datenverbindung empfängt.

Weiterhin ist - neben dem Verfahren zum Betrieb einer DSL-Leitung gemäß der vorliegenden Erfindung - Gegenstand der vorliegenden Erfindung auch ein Zugangsknotengerät zum netzseitigen Anschluss an eine DSL-Leitung in einem Telekommunikationsnetz, wobei die DSL-Leitung zwischen dem Zugangsknotengerät und einem teilnehmerseitigen Anschlussgerät zur Übertragung von Nutzdaten und Signalisierungsinformationen vorgesehen ist,
wobei das Zugangsknotengerät, das Anschlussgerät sowie die DSL-Leitung alternativ in einem ersten Betriebsmodus oder in einem zweiten Betriebsmodus oder in einem dritten Betriebsmodus betreibbar ist,
wobei das Zugangsknotengerät, das Anschlussgerät sowie die DSL-Leitung im ersten Betriebsmodus eine vorgegebene erste Datenübertragungsrate aufweist, wobei das Zugangsknotengerät, das Anschlussgerät sowie die DSL-Leitung im zweiten Betriebsmodus eine vorgegebene zweite, reduzierte Datenübertragungsrate aufweist, wobei das Zugangsknotengerät, das Anschlussgerät sowie die DSL-Leitung im dritten Betriebsmodus zumindest teilweise ausgeschaltet sind,
wobei das Zugangsknotengerät derart konfiguriert ist, dass die Einstellung des ersten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät, das Anschlussgerät sowie die DSL-Leitung im zweiten Betriebsmodus befinden und
-- das Zugangsknotengerät und/oder das Anschlussgerät eine Signalisierungsinformation zum Aufbau einer vorgegebenen, einen Datenübertragungsbedarf mit erhöhter Datenübertragungsrate benötigende Datenverbindung empfängt,
   wobei das Zugangsknotengerät derart konfiguriert ist, dass die Einstellung des ersten oder zweiten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät, das Anschlussgerät sowie die DSL-Leitung im dritten Betriebsmodus befinden und
-- das Zugangsknotengerät und/oder das Anschlussgerät eine Signalisierungsinformation zum Aufbau einer vorgegebenen, einen Datenübertragungsbedarf mit erhöhter Datenübertragungsrate benötigende Datenverbindung empfängt,
wobei das Anschlussgerät eine erste Erkennereinheit aufweist oder dem Anschlussgerät eine erste Erkennereinheit zugeordnet ist, wobei das Zugangsknotengerät eine zweite Erkennereinheit aufweist oder dem Zugangsknotengerät eine zweite Erkennereinheit zugeordnet ist, wobei das Anschlussgerät derart konfiguriert ist, dass mittels der ersten Erkennereinheit und/oder mittels der zweiten Erkennereinheit durch einen Vergleich der empfangenen Signalisierungsinformation mit einer vorbestimmten Referenzinformation detektiert wird, ob ein Datenübertragungsbedarf einer erhöhten Datenübertragungsrate erwartet wird,
wobei das Zugangsknotengerät derart konfiguriert ist, dass die vorgegebene Datenverbindung eine teilnehmerseitig initiierte Datenverbindung ist und mittels der ersten Erkennereinheit erkannt wird oder wobei das Anschlussgerät derart konfiguriert ist, dass die vorgegebene Datenverbindung eine teilnehmerseitig terminierte Datenverbindung ist und mittels der zweiten Erkennereinheit erkannt wird.

Weiterhin ist - neben dem Verfahren zum Betrieb einer DSL-Leitung gemäß der vorliegenden Erfindung, dem Anschlussgerät und dem Zugangsknotengerät - Gegenstand der vorliegenden Erfindung auch ein System umfassend ein Anschlussgerät zum teilnehmerseitigen Anschluss an eine DSL-Leitung in einem Telekommunikationsnetz und ein Zugangsknotengerät zum netzseitigen Anschluss an die DSL-Leitung in einem Telekommunikationsnetz, wobei die DSL-Leitung zwischen einem netzseitigen Zugangsknotengerät und dem Anschlussgerät zur Übertragung von Nutzdaten und Signalisierungsinformationen vorgesehen ist,
wobei das Zugangsknotengerät, das Anschlussgerät sowie die DSL-Leitung alternativ in einem ersten Betriebsmodus oder in einem zweiten Betriebsmodus oder in einem dritten Betriebsmodus betreibbar ist,
wobei das Zugangsknotengerät, das Anschlussgerät sowie die DSL-Leitung im ersten Betriebsmodus eine vorgegebene erste Datenübertragungsrate aufweist,
wobei das Zugangsknotengerät, das Anschlussgerät sowie die DSL-Leitung im zweiten Betriebsmodus eine vorgegebene zweite, reduzierte Datenübertragungsrate aufweist, wobei das Zugangsknotengerät, das Anschlussgerät sowie die DSL-Leitung im dritten Betriebsmodus zumindest teilweise ausgeschaltet sind,
wobei das Anschlussgerät und das Zugangsknotengerät derart konfiguriert ist, dass die Einstellung des ersten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät, das Anschlussgerät sowie die DSL-Leitung im zweiten Betriebsmodus befinden und
-- das Zugangsknotengerät und/oder das Anschlussgerät eine Signalisierungsinformation zum Aufbau einer vorgegebenen, einen Datenübertragungsbedarf mit erhöhter Datenübertragungsrate benötigende Datenverbindung empfängt,
   wobei das Anschlussgerät und das Zugangsknotengerät derart konfiguriert ist, dass die Einstellung des ersten oder zweiten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät, das Anschlussgerät sowie die DSL-Leitung im dritten Betriebsmodus befinden und
-- das Zugangsknotengerät und/oder das Anschlussgerät eine Signalisierungsinformation zum Aufbau einer vorgegebenen, einen Datenübertragungsbedarf mit erhöhter Datenübertragungsrate benötigende Datenverbindung empfängt,
wobei das Anschlussgerät eine erste Erkennereinheit aufweist oder dem Anschlussgerät eine erste Erkennereinheit zugeordnet ist, wobei das Zugangsknotengerät eine zweite Erkennereinheit aufweist oder dem Zugangsknotengerät eine zweite Erkennereinheit zugeordnet ist, wobei das Anschlussgerät derart konfiguriert ist, dass mittels der ersten Erkennereinheit und/oder mittels der zweiten Erkennereinheit durch einen Vergleich der empfangenen Signalisierungsinformation mit einer vorbestimmten Referenzinformation detektiert wird, ob ein Datenübertragungsbedarf einer erhöhten Datenübertragungsrate erwartet wird,
wobei das Zugangsknotengerät derart konfiguriert ist, dass die vorgegebene Datenverbindung eine teilnehmerseitig initiierte Datenverbindung ist und mittels der ersten Erkennereinheit erkannt wird oder wobei das Anschlussgerät derart konfiguriert ist, dass die vorgegebene Datenverbindung eine teilnehmerseitig terminierte Datenverbindung ist und mittels der zweiten Erkennereinheit erkannt wird.

Erfindungsgemäß ist es besonders vorteilhaft, dass das erfindungsgemäße Verfahren gemäß der verschiedenen Ausführungen durch das Anschlussgerät zum teilnehmerseitigen Anschluss an eine DSL-Leitung bzw. durch das Zugangsknotengerät zum netzseitigen Anschluss an eine DSL-Leitung realisiert bzw. durchgeführt wird.

Hierbei ist es besonders vorteilhaft, dass neben dem ersten und zweiten Betriebsmodus auch der dritte Betriebsmodus möglich ist.

Weiterhin bezieht sich die vorliegende Erfindung auch auf ein Programm bzw. ein Computerprogrammprodukt mit einem computerlesbaren Programmcode zur Steuerung eines erfindungsgemäßen Anschlussgeräts oder eines erfindungsgemäßen Zugangsknotengeräts.

Ausführungsbeispiele der Erfindung sind in der Zeichnung dargestellt und in der nachfolgenden Beschreibung näher erläutert. Die Figuren schränken den allgemeinen Erfindungsgedanken nicht ein.

### Kurze Beschreibung der Zeichnungen

Figur 1 zeigt eine schematische Darstellung einer Verbindung zwischen einem Teilnehmer und einem Telekommunikationsnetzwerk unter Verwendung einer DSL-Leitung zwischen einem Anschlussgerät und einem Zugangsknotengerät.
Figur 2 zeigt eine schematische Darstellung eines Anschlussgeräts und eines Zugangsknotengeräts gemäß einer ersten Ausführungsform der vorliegenden Erfindung.
Figur 3 zeigt eine schematische Darstellung eines Anschlussgeräts und eines Zugangsknotengeräts gemäß einer alternativen Ausführungsform der vorliegenden Erfindung.
Figuren 4 bis 7 zeigen schematische Darstellungen eines Anschlussgeräts und eines Zugangsknotengeräts gemäß einer weiteren Ausführungsform der vorliegenden Erfindung.

### Ausführungsform(en) der Erfindung

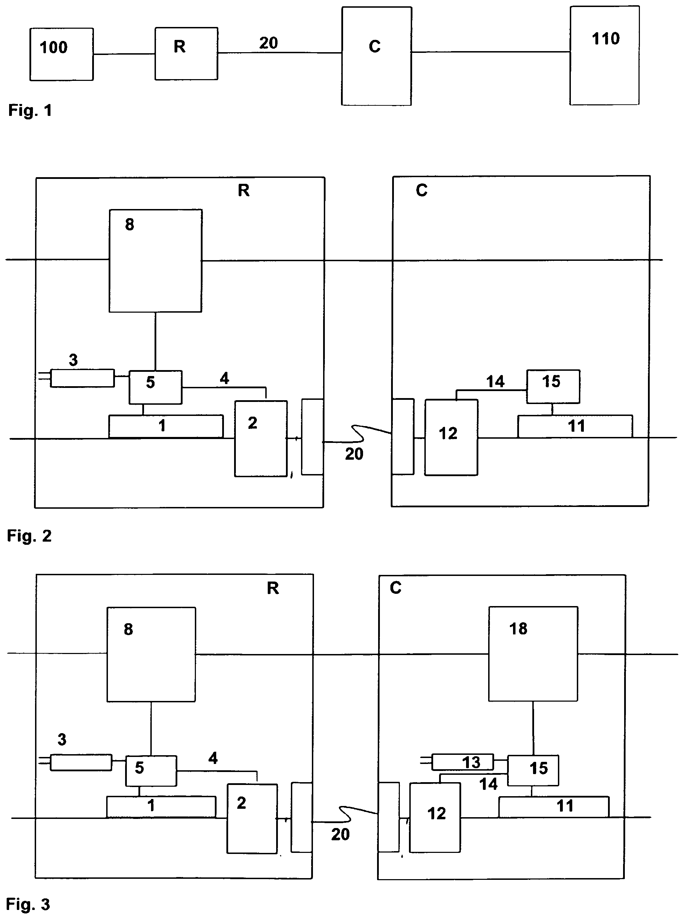

In Figur 1 ist schematisch eine Darstellung einer Verbindung zwischen einem Teilnehmer 100 und einem Telekommunikationsnetzwerk 110 unter Verwendung einer DSL-Leitung 20 zwischen einem Anschlussgerät R und einem Zugangsknotengerät C abgebildet.

Das Anschlussgerät R und das Zugangsknotengerät C werden im Folgenden auch als DSL-Geräte bzw. DSL-Komponenten bezeichnet. Das Anschlussgerät R wird auch als xTU-R (xDSL Termination Unit Remote) bezeichnet und das Zugangsknotengerät C als xTU-C (xDSL Termination Unit Central). Zwischen dem Anschlussgerät R und dem Zugangsknotengerät C ist eine DSL-Leitung 20 gemäß dem Stand der Technik vorhanden. Das Anschlussgerät R wird auch als IAD (Integrated access device) bezeichnet. Der Teilnehmer 100 wird auch als CPE (Customer Premises Equipment) bezeichnet und stellt beispielsweise ein Endgerät für Sprachtelefonie (Telefon) dar. Es ist jedoch erfindungsgemäß auch möglich, dass die Funktionalitäten von Teilnehmer 100 und Anschlussgerät R anders aufgeteilt oder integriert vorgesehen sind. Auf der netzseitigen Seite der DSL-Leitung 20 stellt das Telekommunikationsnetzwerk 110 beispielsweise eine VoIP-Signalisierung dar. Das Anschlussgerät R und das Zugangsknotengerät C sind in der Lage, wenigstens in einem ersten Betriebsmodus und in einem zweiten Betriebsmodus betrieben zu werden. Der erste Betriebsmodus entspricht der vollen Sendeleistung beispielsweise eines DSL-Chips innerhalb des Anschlussgeräts R bzw. des Zugangsknotengeräts C und damit einer maximalen (vorgegebenen) Datenrate bzw. Datenübertragungsrate. Der zweite Betriebsmodus entspricht einer reduzierten Sendeleistung und damit einer reduzierten Datenrate bzw. Datenübertragungsrate. Es kann erfindungsgemäß auch vorgesehen sein, dass das Anschlussgerät R und/oder das Zugangsknotengerät C in einem dritten Betriebsmodus betreibbar sind, in welchem die Leistungsaufnahme noch mehr eingeschränkt ist.

In Figur 2 ist eine schematische Darstellung eines Anschlussgeräts R und eines Zugangsknotengeräts C gemäß einer alternativen Ausführungsform der vorliegenden Erfindung abgebildet. Das Anschlussgerät R weist im dargestellten Ausführungsbeispiel einen Datenmonitor 1, eine DSL-Logik 2, eine erste Erkennereinheit 3, eine Steuerleitung 4, einen Mikroprozessor 5 und eine VoIP-Signalisierung 8 auf. Das Zugangsknotengerät C weist im dargestellten Ausführungsbeispiel einen weiteren Datenmonitor 11, eine weitere DSL-Logik 12, eine weitere Steuerleitung 14, einen weiteren Mikroprozessor 15 und eine weitere VoIP-Signalisierung 18 auf.

### Verhalten upstream (d.h. teilnehmerseitig initiiert)

Im Ausgangszustand befindet sich die DSL-Verbindung 20 und die an sie angeschlossenen Komponenten im zweiten Betriebsmodus (L2), d.h. die Datenrate ist auf einem abgesenkten Niveau, beispielsweise spezifiziert durch die L2-Datenraten (beispielsweise mindestens 128 kbit/s, max 4 Mbit/s), abgesenkt.

Im Fall dass der Teilnehmer 100 eine Sprachverbindung initiiert, wird bei einem typischen Verbindungsaufbau über das SIP (Session Initiation Protocol) eine sog. Invite-Nachricht (d.h. eine Signalisierungsnachricht zum Verbindungsaufbau als Signalisierungsinformation) zum Netz 110 hin, d.h. über die DSL-Leitung 20 zum Zugangsknotengerät C geschickt. Diese Nachricht füllt in der Regel ein IP Paket von kleiner Größe auf. Dieses SIP-Paket tritt nun in das Anschlussgerät R ein und wird dort an dem Datenmonitor (upstream) 1 des Anschlussgeräts R als Datenpaket erkannt. Über die erste Erkennereinheit 3 des Anschlussgeräts R wird die Nachricht in dem Mikroprozessor 5 des Anschlussgeräts R verglichen mit einer VoIP Referenzsignalisierung, d.h. mit der Referenzinformation. Über die Steuerleitung 4 des Anschlussgeräts R wird die DSL-Logik 2 vom Mikroprozessor 5 derart gesteuert, dass die DSL-Leitung 20 den Low Power Mode (d.h. den zweiten Betriebsmodus) nach ITU-T G.992.3 und ITU-T G.992.5 von L2 auf L0 verlässt, d.h. den ersten Betriebsmodus einstellt. Es steht dann auf der DSL-Leitung 20 zwischen dem Anschlussgerät R und dem Zugangsknotengerät C bereits eine Datenverbindung mit hoher Bandbreite bzw. Datenübertragungsrate bereit, wenn der RTP Datenstrom (bzw. RTP Medienstrom) mit den Daten, insbesondere Sprachsignalen unter Verwendung von VoIP, anliegt. Solange der Datenmonitor 1 einen Datenfluss erkennt, wird die DSL-Logik 2 nicht derart angesteuert (über die Steuerleitung 4 seitens des Mikroprozessors 5), dass der Zustand der DSL-Leitung 20 in den zweiten (oder gar den dritten) Betriebsmodus einstellt. Falls der Datenmonitor 1 über einen hinreichend langen vorgegebenen Zeitdauer bzw. über ein hinreichend langes Zeitintervall keinen Datenverkehr erkennt, steuert der Mikroprozessor 5 über die Steuerleitung 4 die DSL-Steuerlogik 2 derart, dass die DSL-Leitung wieder in einen leistungsreduzierten Betriebszustand, insbesondere den zweiten Betriebsmodus, wechselt.

### Verhalten downstream (d.h. teilnehmerseitig terminiert)

Im Ausgangszustand befindet sich die DSL-Verbindung 20 und die an sie angeschlossenen Komponenten wieder im zweiten Betriebsmodus (L2), d.h. die Datenrate ist auf einem abgesenkten Niveau abgesenkt.

Im Fall dass für den Teilnehmer 100 eine Sprachverbindung aufgebaut werden soll, d.h. die Sprachverbindung wird von einem anderen Teilnehmer bzw. netzseitig initiiert, handelt es sich um eine teilnehmerseitig terminierte Verbindung. Wiederum wird über das SIP (Session Initiation Protocol) eine sog. Invite-Nachricht (d.h. eine Signalisierungsnachricht zum Verbindungsaufbau) zum Teilnehmer 100 hin, d.h. über die DSL-Leitung 20 zum Anschlussgerät R geschickt. Dieses SIP-Paket tritt nun in das Zugangsknotengerät C ein und wird dort an dem weiteren Datenmonitor (downstream) 11 des Zugangsknotengeräts C als Datenpaket erkannt. Der weitere Datenmonitor 11 erkennt jedoch lediglich eine geringe (momentan angeforderte) Datenübertragungsrate und belässt die DSL-Leitung im zweiten Betriebsmodus. Die SIP invite Nachricht erreicht ohne Einfluss auf den Betriebsmodus der DSL-Leitung das Anschlussgerät R und das Endgerät 100, jedoch wird die Signalisierungsantwort des Endgeräts 100 im Anschlussgerät R im Datenmonitor 1 (upstream) als Datenpaket und Signalisierungsinformation erkannt und über die Erkennereinheit 3 im Mikroprozessor 5 des Anschlussgeräts R verglichen mit der VoIP Referenzsignalisierung, d.h. mit der Referenzinformation. Über die Steuerleitung 4 des Anschlussgeräts R wird die DSL-Logik 2 des Anschlussgeräts R vom Mikroprozessor 5 derart gesteuert, dass die DSL-Leitung 20 den Low Power Mode (d.h. den zweiten Betriebsmodus) nach ITU-T G.992.3 und ITU-T G.992.5 von L2 auf L0 verlässt, d.h. den ersten Betriebsmodus einstellt. Es steht dann wiederum auf der DSL-Leitung 20 zwischen dem Anschlussgerät R und dem Zugangsknotengerät C bereits eine Datenverbindung mit hoher Bandbreite bzw. Datenübertragungsrate bereit, wenn der RTP Datenstrom (bzw. RTP Medienstrom) mit den Daten, insbesondere Sprachsignalen unter Verwendung von VoIP, anliegt. Solange der Datenmonitor 1 einen Datenfluss erkennt, wird die DSL-Logik 2 nicht derart angesteuert (über die Steuerleitung 4 seitens des Mikroprozessors 5), dass der Zustand der DSL-Leitung 20 in den zweiten (oder gar den dritten) Betriebsmodus einstellt. Falls der Datenmonitor 1 über einen hinreichend langen vorgegebenen Zeitdauer bzw. über ein hinreichend langes Zeitintervall keinen Datenverkehr erkennt, steuert der Mikroprozessor 5 über die Steuerleitung 4 die DSL-Steuerlogik 2 derart, dass die DSL-Leitung wieder in einen leistungsreduzierten Betriebszustand, insbesondere den zweiten Betriebsmodus, wechselt.

In Figur 3 ist eine schematische Darstellung eines Anschlussgeräts R und eines Zugangsknotengeräts C gemäß einer ersten Ausführungsform der vorliegenden Erfindung abgebildet. Das Anschlussgerät R weist im dargestellten Ausführungsbeispiel einen Datenmonitor 1, eine DSL-Logik 2, eine erste Erkennereinheit 3, eine Steuerleitung 4, einen Mikroprozessor 5 und eine VoIP-Signalisierung 8 auf. Das Zugangsknotengerät C weist im dargestellten Ausführungsbeispiel einen weiteren Datenmonitor 11, eine weitere DSL-Logik 12, eine zweite Erkennereinheit 13, eine weitere Steuerleitung 14, einen weiteren Mikroprozessor 15 und eine weitere VoIP-Signalisierung 18 auf.

### Verhalten upstream (d.h. teilnehmerseitig initiiert)

Im Ausgangszustand befindet sich die DSL-Verbindung 20 und die an sie angeschlossenen Komponenten entweder wiederum im zweiten Betriebsmodus (L2) (d.h. die Datenrate ist auf einem abgesenkten Niveau, beispielsweise spezifiziert durch die L2-Datenraten (beispielsweise mindestens 128 kbit/s, max 4 Mbit/s), abgesenkt) oder aber im dritten Betriebsmodus (L3) (d.h. die DSL-Leitung 20 ist ausgeschaltet bzw. inaktiv).

Im Fall dass der Teilnehmer 100 eine Sprachverbindung initiiert, wird bei einem typischen Verbindungsaufbau über das SIP (Session Initiation Protocol) eine sog. Invite-Nachricht (d.h. eine Signalisierungsnachricht zum Verbindungsaufbau) zum Netz 110 hin, d.h. über die DSL-Leitung 20 zum Zugangsknotengerät C geschickt. Dieses SIP-Paket tritt nun in das Anschlussgerät R ein und wird dort am Datenmonitor (upstream) 1 des Anschlussgeräts R als Datenpaket erkannt. Über die erste Erkennereinheit 3 des Anschlussgeräts R wird die Nachricht im Mikroprozessor 5 des Anschlussgeräts R verglichen mit der VoIP Referenzsignalisierung, d.h. mit der Referenzinformation. Über die Steuerleitung 4 des Anschlussgeräts R wird die DSL-Logik 2 vom Mikroprozessor 5 derart gesteuert, dass die DSL-Leitung 20 den Low Power Mode (d.h. den zweiten Betriebsmodus) nach ITU-T G.992.3 und ITU-T G.992.5 von L3 auf L2 (sofern die DSL-Leitung sich im dritten Betriebszustand L3 befand) und von L2 auf L0 verlässt, d.h. den ersten Betriebsmodus einstellt. Es steht dann auf der DSL-Leitung 20 zwischen dem Anschlussgerät R und dem Zugangsknotengerät C bereits eine Datenverbindung mit hoher Bandbreite bzw. Datenübertragungsrate bereit, wenn der RTP Datenstrom (bzw. RTP Medienstrom) mit den Daten, insbesondere Sprachsignalen unter Verwendung von VoIP, anliegt. Solange der Datenmonitor 1 einen Datenfluss erkennt, wird die DSL-Logik 2 nicht derart angesteuert (über die Steuerleitung 4 seitens des Mikroprozessors 5), dass der Zustand der DSL-Leitung 20 in den zweiten (oder gar den dritten) Betriebsmodus einstellt. Falls der Datenmonitor 1 über einen hinreichend langen vorgegebenen Zeitdauer bzw. über ein hinreichend langes Zeitintervall keinen Datenverkehr erkennt, steuert der Mikroprozessor 5 über die Steuerleitung 4 die DSL-Steuerlogik 2 derart, dass die DSL-Leitung wieder in einen leistungsreduzierten Betriebszustand, insbesondere den zweiten Betriebsmodus (oder auch den dritten Betriebsmodus), wechselt.

### Verhalten downstream (d.h. teilnehmerseitig terminiert)

Im Ausgangszustand befindet sich die DSL-Verbindung 20 und die an sie angeschlossenen Komponenten wieder im zweiten Betriebsmodus (L2) (d.h. die Datenrate ist auf einem abgesenkten Niveau, beispielsweise spezifiziert durch die L2-Datenraten (beispielsweise mindestens 128 kbit/s, max 4 Mbit/s), abgesenkt) oder aber im dritten Betriebsmodus (L3) (d.h. die DSL-Leitung 20 ist ausgeschaltet bzw. inaktiv).

Im Fall dass für den Teilnehmer 100 eine Sprachverbindung aufgebaut werden soll, d.h. die Sprachverbindung wird von einem anderen Teilnehmer bzw. netzseitig initiiert, handelt es sich um eine teilnehmerseitig terminierte Verbindung. Wiederum wird über das SIP (Session Initiation Protocol) eine sog. Invite-Nachricht (d.h. eine Signalisierungsnachricht zum Verbindungsaufbau) zum Teilnehmer 100 hin geschickt. Wenn die DSL-Leitung sich im dritten Betriebsmodus befindet, ist diese inaktiv. Das gesandte SIP-Paket tritt daher in das Zugangsknotengerät C ein und wird dort an dem weiteren Datenmonitor (downstream) 11 des Zugangsknotengeräts C als Datenpaket erkannt. Gemäß der zweiten Ausführungsform nach Figur 3 weist auch das Zugangsknotengerät C neben dem weiteren Datenmonitor 11 die zweite Erkennereinheit 13 auf (bzw. die zweite Erkennereinheit 13 ist dem Zugangsknotengerät zugeordnet). Über die zweite Erkennereinheit 13 des Zugangsknotengerät C wird die SIP invite Nachricht im weiteren Mikroprozessor 15 des Zugangsknotengerät C verglichen mit der VoIP Referenzsignalisierung, d.h. mit der Referenzinformation. Über die weitere Steuerleitung 14 des Zugangsknotengeräts C wird die weitere DSL-Logik 12 des Zugangsknotengeräts C vom weiteren Mikroprozessor 15 derart gesteuert, dass die DSL-Leitung 20 den Low Power Mode oder "inactive mode" (d.h. den zweiten oder dritten Betriebsmodus) nach ITU-T G.992.3 und ITU-T G.992.5 von L3 bzw. L2 auf L0 verlässt, d.h. den ersten Betriebsmodus einstellt. Es steht dann auf der DSL-Leitung 20 zwischen dem Anschlussgerät R und dem Zugangsknotengerät C bereits eine Datenverbindung mit hoher Bandbreite bzw. Datenübertragungsrate bereit, wenn der RTP Datenstrom (bzw. RTP Medienstrom) mit den Daten, insbesondere Sprachsignalen unter Verwendung von VoIP, anliegt. Solange der weitere Datenmonitor 11 einen Datenfluss erkennt, wird die weitere DSL-Logik 12 nicht derart angesteuert (über die weitere Steuerleitung 14 seitens des weiteren Mikroprozessors 15), dass der Zustand der DSL-Leitung 20 in den zweiten (oder gar den dritten) Betriebsmodus einstellt. Falls der weitere Datenmonitor 11 über einen hinreichend langen vorgegebenen Zeitdauer bzw. über ein hinreichend langes Zeitintervall keinen Datenverkehr erkennt, steuert der weitere Mikroprozessor 15 über die weitere Steuerleitung 14 die weitere DSL-Steuerlogik 12 derart, dass die DSL-Leitung 20 wieder in einen leistungsreduzierten Betriebszustand, insbesondere den dritten oder zweiten Betriebsmodus, wechselt.

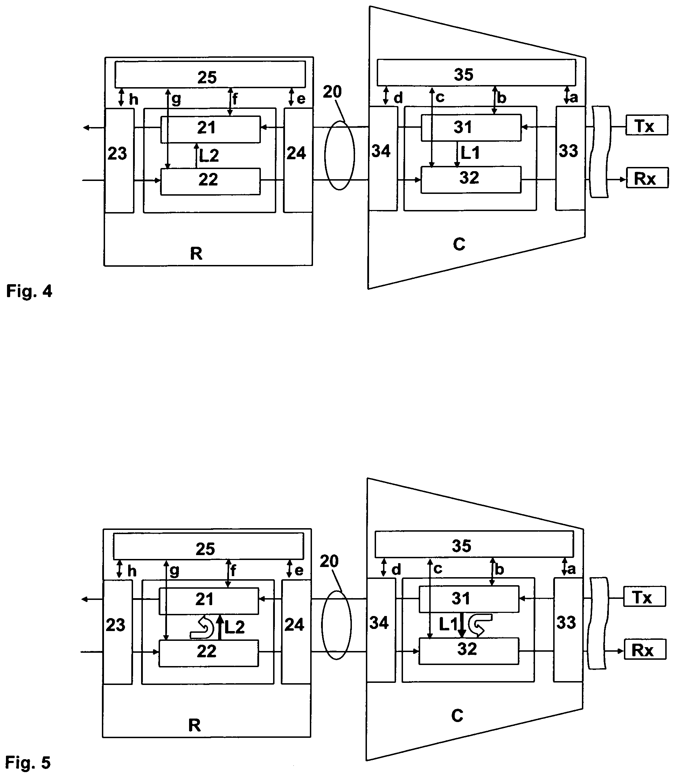

In den Figuren 4 bis 7 ist jeweils eine schematische Darstellung eines Anschlussgeräts R und eines Zugangsknotengeräts C gemäß einer weiteren Ausführungsform der vorliegenden Erfindung abgebildet. Die weitere Ausführungsform der vorliegenden Erfindung kann insbesondere mit der ersten Ausführungsform kombiniert werden. Gemäß der weiteren Ausführungsform der vorliegenden Erfindung kann in vorteilhafter Weise in Pausenzeiten, d.h. in solchen Zeiten, in denen der Übertragungsbedarf über die DSL-Leitung 20 entweder sehr gering ist oder aber sogar gänzlich verschwindet, Strom für den Betrieb von Komponenten der DSL-Leitung 20 eingespart werden, insbesondere durch Reduzierung der Sendeleistung auf einer Übertragungsstrecke der DSL-Leitung 20. Gemäß sowohl der ersten Ausführungsform als auch der weiteren Ausführungsform ist es vorgesehen, dass im Fall des dritten Betriebsmodus (L3) der DSL-Leitung 20 ein Aufweckereignis, getriggert insbesondere durch ein Übertragungsprotokoll oder eine entsprechende Applikation, gesteuert werden kann. Es gibt allerdings auch Zustände, in denen nicht unmittelbar ein Aufweckereignis bzw. ein Aufwecken gewünscht ist. Hierzu ist es gemäß der weiteren Ausführungsform vorgesehen, dass ein Portreflektor wenigstens am Anschlussgerät R oder am Zugangsknotengerät C oder sowohl am Anschlussgerät R als auch am Zugangsknotengerät C realisiert ist bzw. die Funktion eines Portreflektors am Anschlussgerät R oder am Zugangsknotengerät C oder sowohl am Anschlussgerät R als auch am Zugangsknotengerät C realisiert ist. Ein solcher Portreflektor ist in der Lage, applikationsabhängig Protokolle zu terminieren bzw. Aktionen stellvertretend für die gegenüberliegende Seite (d.h. ein Portreflektor am Anschlussgerät R stellvertretend für das Zugangsknotengerät C und ein Portreflektor am Zugangsknotengerät C stellvertretend für das Anschlussgerät R) auszulösen.

Erfindungsgemäß ist es vorgesehen, dass das Anschlussgerät R eine erste Portreflektorfunktionalität oder das Zugangsknotengerät eine zweite Portreflektorfunktionalität aufweist oder dass sowohl das Anschlussgerät eine erste Portreflektorfunktionalität als auch das Zugangsknotengerät eine zweite Portreflektorfunktionalität aufweisen. Eine solche Portreflektorfunktionalität kann erfindungsgemäß im Anschlussgerät R bzw. im Zugangsknotengerät C entweder als eine separate Einheit bzw. eine Komponente in Form eines Portreflektors realisiert sein oder aber in Form einer softwaremäßigen Implementierung in einer im Anschlussgerät bzw. im Zugangsknotengerät vorhandenen Hardwarekomponente.

Gemäß der weiteren Ausführungsform der vorliegenden Erfindung ist es vorgesehen, dass das Anschlussgerät R eine erste Zustandsmaschine 25 bzw. eine erste virtuelle Zustandsmaschine 25 aufweist und dass das Zugangsknotengerät 10 eine zweite Zustandsmaschine 35 bzw. eine zweite virtuelle Zustandsmaschine 35 aufweist. Ferner ist vorgesehen, dass das Anschlussgerät R eine erste Weiterleitungseinheit 21 und eine zweite Weiterleitungseinheit 22 aufweist und dass das Zugangsknotengerät C eine dritte Weiterleitungseinheit 31 und eine vierte Weiterleitungseinheit 32 aufweist. Ferner ist es gemäß der weiteren Ausführungsform der vorliegenden Erfindung vorgesehen, dass das Anschlussgerät R eine erste Anwendungsdetektionsfunktion 23 aufweist und dass das Zugangsknotengerät C eine zweite Anwendungsdetektionsfunktion 33 aufweist. Ferner weist das Anschlussgerät R eine erste Moduskontrollfunktion 24 auf und das Zugangsknotengerät C weist eine zweite Moduskontrollfunktion 34 auf. Die erste Moduskontrollfunktion 24 kontrolliert bzw. steuert den Betriebsmodus der DSL-Leitung 20 auf der Seite des Anschlussgerätes R, d. h. von der Downstream-Richtung in Richtung zum Zugangsknotengerät C, d. h. in Upstream-Richtung. Die zweite Moduskontrollfunktion 34 steuert die DSL-Leitung 20 auf der Seite des Zugangsknotengeräts C, d. h. ausgehend von der Upstream-Richtung in Downstream-Richtung. Die erste Anwendungsdetektionsfunktion 23 erkennt bzw. detektiert eine Anwendungsanforderung in Upstream-Richtung, d. h. eine Anforderung zur Datenübertragung, die downstreamseitig am Anschlussgerät R zur Übertragung an das Zugangsknotengerät C angefordert wird. Die zweite Anwendungsdetektionsfunktion 33 erkennt bzw. detektiert umgekehrt eine in Downstream-Richtung auf der Upstream-Seite des Zugangsknotengeräts C an diesem anliegende Anforderung zur Übertragung von Daten in Downstream-Richtung, d. h. zum Anschlussgerät R. Die erste Weiterleitungseinheit 21 leitet einen upstreamseitig des Anschlussgeräts R ankommenden Datenstrom downstreamseitig weiter, d. h. in Downstream-Richtung. Die zweite Weiterleitungseinheit leitet einen downstreamseitig des Anschlussgeräts R ankommenden Datenstrom in Upstream-Richtung, d. h. zum Zugangsknotengerät C, weiter. Die dritte Weiterleitungseinheit 31 leitet einen upstreamseitig des Zugangsknotengeräts C ankommenden Datenstrom downstreamseitig, d. h. zum Anschlussgerät R, weiter. Die vierte Weiterleitungseinheit 32 leitet einen downstreamseitig am Zugangsknotengerät C ankommenden Datenstrom in Upstream-Richtung weiter. Die erste und zweite Weiterleitungseinheit wird durch die erste Zustandsmaschine 25 gesteuert. Die zweite und dritte Weiterleitungseinheit 31, 32 wird durch die zweite Zustandsmaschine 35 gesteuert. Im ersten und zweiten Betriebsmodus der DSL-Leitung 20 (L0- und L2-Modus der DSL-Leitung 20) arbeiten sämtliche Weiterleitungseinheiten im Weiterleitungsmodus (Forwarding Mode), um einen vollständigen Protokolltransport sowohl in Upstream-Richtung als auch in Downstream-Richtung zu gewährleisten. Im dritten Betriebszustand der DSL-Leitung 20 (Zustand L3) wird eine Reflektorschleife sowohl im Anschlussgerät R als auch im Zugangsknotengerät C realisiert. Die Steuerung der verschiedenen Betriebszustände der Komponenten des Anschlussgeräts R bzw. des Zugangsknotengeräts C werden in den Figuren 4 bis 7 mit den Bezugszeichen a, b, c, d, e, f, g und h bezeichnet, wobei dem Bezugszeichen a die Steuerung seitens der zweiten Zustandsmaschine 35 der zweiten Anwendungsdetektionsfunktion 33 entspricht, dem Bezugszeichen b die Steuerung durch die zweite Anwendungsdetektionsfunktion 33 der dritten Weiterleitungseinheit 31 entspricht, das Bezugszeichen c sich auf die Steuerung durch die zweite Zustandsmaschine 35 der vierten Weiterleitungseinheit 32 bezieht, das Bezugszeichen d sich auf die Steuerung durch die zweite Zustandsmaschine 35 der zweiten Moduskontrollfunktion 34 bezieht, das Bezugszeichen e sich auf die Steuerung durch die erste Zustandsmaschine 25 der ersten Moduskontrollfunktion 24 bezieht, das Bezugszeichen f sich auf die Steuerung durch die erste Zustandsmaschine 25 der erste Weiterleitungseinheit 21 bezieht, das Bezugszeichen g sich auf die Steuerung durch die erste Zustandsmaschine 25 der zweiten Weiterleitungseinheit 22 bezieht und das Bezugszeichen h sich auf die Steuerung durch die erste Zustandsmaschine 25 der ersten Anwendungsdetektionsfunktion 23 bezieht.

Gemäß der weiteren Ausführungsform der vorliegenden Erfindung entsprechen die Anwendungsdetektionsfunktionen den Erkennereinheiten gemäß der ersten Ausführungsform, d. h. die erste Erkennereinheit 3 entspricht der ersten Anwendungsdetektionsfunktion 23 und die zweite Erkennereinheit 13 entspricht der zweiten Anwendungsdetektionsfunktion 33.

In Figur 5 ist ein Beispiel schematisch abgebildet, bei dem sich die DSL-Leitung 20 und das Anschlussgerät R sowie das Zugangsknotengerät C in dem dritten Betriebszustand (Zustand L3) befindet. In diesem Betriebszustand können keine Nutzdaten über die DSL-Leitung 20 übertragen werden, jedoch ist jeweils ein Empfänger sowohl anschlussgeräteseitig als auch zugangsknotengeräteseitig in Betrieb, d. h. ein Empfänger bzw. eine Empfängerkomponente im Anschlussgerät R ist in der Lage, die Signale, d. h. Signalisierungssignale bzw. Steuerungssignale, auf der DSL-Leitung 20 in Downstream-Richtung zu empfangen, zu verarbeiten und zu interpretieren. Symmetrisch hierzu ist ein Empfänger bzw. eine Empfängerkomponente im Zugangsknotengerät C in der Lage, Signale, d. h. Steuerungssignale bzw. Signalisierungsinformationen, zu empfangen, zu interpretieren und auszuwerten, die über die DSL-Leitung 20 in Upstream-Richtung ankommen. Solche Signalisierungsinformationen bzw. Steuerungssignale können insbesondere Pilottöne oder sonstige Managementinformationen sein. Für den Fall, dass sich die DSL-Leitung 20 im dritten Betriebsmodus (L3-Zustand) befindet, ist es nun erfindungsgemäß vorgesehen, dass im Zugangsknotengerät C eine Simulierung des Anschlussgerätes R erfolgt und upstreamseitig, d. h. netzwerkseitig, ankommender Datenverkehr reflektiert wird, was in Figur 5 mit einem 180°-Pfeil versinnbildlicht ist. Entsprechend ist es erfindungsgemäß vorgesehen, dass downstreamseitig am Anschlussgerät R ankommender Datenverkehr im dritten Betriebszustand der DSL-Leitung 20 vom Anschlussgerät R reflektiert wird, was ebenfalls mittels eines 180°-Pfeils in Figur 5 angedeutet ist.

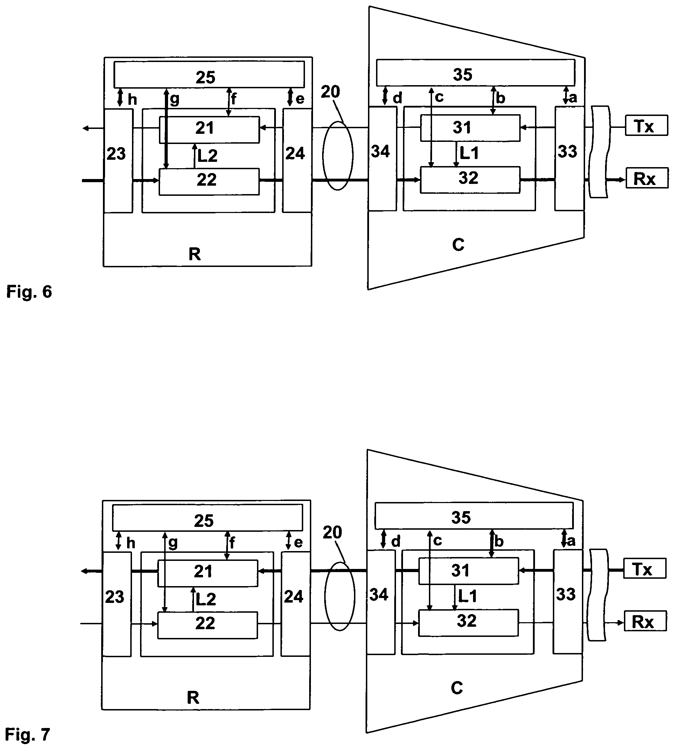

Die Figuren 6 und 7 stellen schematisch den Prozess des Aufwachens der DSL-Leitung 20 aus dem dritten Betriebszustand (L3-Zustand) in entweder den ersten Betriebszustand (L0-Zustand) oder aber in den zweiten Betriebszustand (L2-Zustand) dar, wobei die Figur 6 ein Aufwachen der DSL-Leitung 20 darstellt, welches downstreamseitig getriggert ist, d. h. das Aufwachen erfolgt ausgehend vom Anschlussgerät R in Upstream-Richtung, während die Figur 7 symmetrisch hierzu eine Aufwachfunktionalität der DSL-Leitung 20 in Downstream-Richtung, d. h. getriggert vom Zugangsknotengerät C, repräsentiert.

## Patentansprüche

1. Verfahren zum Betrieb einer DSL-Leitung, digital subscriber line - Leitung, (20) in einem Telekommunikationsnetz, wobei die DSL-Leitung (20) zwischen einem netzseitigen Zugangsknotengerät (C) und einem teilnehmerseitigen Anschlussgerät (R) zur Übertragung von Nutzdaten und Signalisierungsinformationen vorgesehen ist, wobei das Zugangsknotengerät (C), das Anschlussgerät (R) sowie die DSL-Leitung (20) alternativ in einem ersten Betriebsmodus oder in einem zweiten Betriebsmodus oder in einem dritten Betriebsmodus betreibbar ist,
wobei das Zugangsknotengerät (C), das Anschlussgerät (R) sowie die DSL-Leitung (20) im ersten Betriebsmodus eine vorgegebene erste Datenübertragungsrate aufweist,
wobei das Zugangsknotengerät (C), das Anschlussgerät (R) sowie die DSL-Leitung (20) im zweiten Betriebsmodus eine vorgegebene zweite, reduzierte Datenübertragungsrate aufweist,
wobei das Zugangsknotengerät (C), das Anschlussgerät (R) sowie die DSL-Leitung (20) im dritten Betriebsmodus zumindest teilweise ausgeschaltet sind,
wobei die Einstellung des ersten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät (C) und das Anschlussgerät (R) sowie die DSL-Leitung (20) im zweiten Betriebsmodus befinden und
-- das Zugangsknotengerät (C) und/oder das Anschlussgerät (R) eine Signalisierungsinformation zum Aufbau einer vorgegebenen, einen Datenübertragungsbedarf mit erhöhter Datenübertragungsrate benötigende Datenverbindung empfängt,
wobei die Einstellung des ersten oder zweiten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät (C), das Anschlussgerät (R) sowie die DSL-Leitung (20) im dritten Betriebsmodus befinden und
-- das Zugangsknotengerät (C) und/oder das Anschlussgerät (R) eine Signalisierungsinformation zum Aufbau einer vorgegebenen, einen Datenübertragungsbedarf mit erhöhter Datenübertragungsrate benötigende Datenverbindung empfängt,
wobei das Anschlussgerät (R) eine erste Erkennereinheit (3) aufweist oder dem Anschlussgerät (R) eine erste Erkennereinheit (3) zugeordnet ist, wobei das Zugangsknotengerät (C) eine zweite Erkennereinheit (13) aufweist oder dem Zugangsknotengerät (C) eine zweite Erkennereinheit zugeordnet ist, wobei mittels der ersten Erkennereinheit und/oder mittels der zweiten Erkennereinheit (13) durch einen Vergleich der empfangenen Signalisierungsinformation mit einer vorbestimmten Referenzinformation detektiert wird, ob ein Datenübertragungsbedarf einer erhöhten Datenübertragungsrate erwartet wird,
wobei die vorgegebene Datenverbindung eine teilnehmerseitig initiierte Datenverbindung ist und mittels der ersten Erkennereinheit (3) erkannt wird und/oder wobei die vorgegebene Datenverbindung eine teilnehmerseitig terminierte Datenverbindung ist und mittels der zweiten Erkennereinheit (13) erkannt wird.

2. Verfahren nach Anspruch 1, **dadurch gekennzeichnet, dass** die Einstellung des ersten Betriebsmodus in Abwesenheit eines momentan vorliegenden Datenübertragungsbedarfs einer erhöhten Datenübertragungsrate ausschließlich vom zweiten Betriebsmodus erfolgt.

3. Verfahren nach einem der vorhergehenden Ansprüche, **dadurch gekennzeichnet, dass** die vorgegebene Datenverbindung eine teilnehmerseitig initiierte Datenverbindung oder eine teilnehmerseitig terminierte Datenverbindung ist und beide Fälle der vorgegebenen Datenverbindung mittels der ersten Erkennereinheit (3) erkannt werden, wenn sich das Zugangsknotengerät (C), das Anschlussgerät (R) sowie die DSL-Leitung (20) im ersten oder zweiten Betriebsmodus befinden.

4. Verfahren nach einem der vorhergehenden Ansprüche, **dadurch gekennzeichnet, dass** die vorgegebene Datenverbindung eine teilnehmerseitig initiierte Datenverbindung oder eine teilnehmerseitig terminierte Datenverbindung ist und beide Fälle der vorgegebenen Datenverbindung mittels der zweiten Erkennereinheit (13) erkannt werden, wenn sich das Zugangsknotengerät (C), das Anschlussgerät (R) sowie die DSL-Leitung (20) im ersten oder zweiten Betriebsmodus befinden.

5. Verfahren nach einem der vorhergehenden Ansprüche, **dadurch gekennzeichnet, dass** das Anschlussgerät (R) eine erste Portreflektorfunktionalität und/oder das Zugangsknotengerät (C) eine zweite Portreflektorfunktionalität aufweist.

6. Verfahren nach einem der vorhergehenden Ansprüche, **dadurch gekennzeichnet, dass** die Referenzsignalisierung eine SIP-invite-Nachricht, Session Initiation Protocol Invite, einer aufzubauenden VoIP-Verbindung, Voice over IP, umfasst.

7. Verfahren nach einem der vorhergehenden Ansprüche, **dadurch gekennzeichnet, dass** die Einstellung des zweiten oder dritten Betriebsmodus für den Fall vorgesehen ist, dass
-- sich das Zugangsknotengerät (C), das Anschlussgerät (R) sowie die DSL-Leitung (20) im ersten Betriebsmodus befinden und
-- während einer vorgegebenen Zeitdauer kein Datenübertragungsbedarf oder ein vergleichsweise geringer Datenübertragungsbedarf detektiert wurde.

8. Anschlussgerät (R) zum teilnehmerseitigen Anschluss an eine DSL-Leitung (20) in einem Telekommunikationsnetz, wobei die DSL-Leitung (20) zwischen einem netzseitigen Zugangsknotengerät (C) und dem Anschlussgerät (R) zur Übertragung von Nutzdaten und Signalisierungsinformationen vorgesehen ist,
wobei das Zugangsknotengerät (C), das Anschlussgerät (R) sowie die DSL-Leitung (20) alternativ in einem ersten Betriebsmodus oder in einem zweiten Betriebsmodus oder in einem dritten Betriebsmodus betreibbar ist,
wobei das Zugangsknotengerät (C), das Anschlussgerät (R) sowie die DSL-Leitung (20) im ersten Betriebsmodus eine vorgegebene erste Datenübertragungsrate aufweist,
wobei das Zugangsknotengerät (C), das Anschlussgerät (R) sowie die DSL-Leitung (20) im zweiten Betriebsmodus eine vorgegebene zweite, reduzierte Datenübertragungsrate aufweist,
wobei das Zugangsknotengerät (C), das Anschlussgerät (R) sowie die DSL-Leitung (20) im dritten Betriebsmodus zumindest teilweise ausgeschaltet sind,
wobei das Anschlussgerät (R) derart konfiguriert ist, dass die Einstellung des ersten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät (C), das Anschlussgerät (R) sowie die DSL-Leitung (20) im zweiten Betriebsmodus befinden und
-- das Zugangsknotengerät (C) und/oder das Anschlussgerät (R) eine Signalisierungsinformation zum Aufbau einer vorgegebenen, einen Datenübertragungsbedarf mit erhöhter Datenübertragungsrate benötigende Datenverbindung empfängt,
wobei das Anschlussgerät (R) derart konfiguriert ist, dass die Einstellung des ersten oder zweiten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät (C), das Anschlussgerät (R) sowie die DSL-Leitung (20) im dritten Betriebsmodus befinden und
-- das Zugangsknotengerät (C) und/oder das Anschlussgerät (R) eine Signalisierungsinformation zum Aufbau einer vorgegebenen, einen Datenübertragungsbedarf mit erhöhter Datenübertragungsrate benötigende Datenverbindung empfängt,
wobei das Anschlussgerät (R) eine erste Erkennereinheit (3) aufweist oder dem Anschlussgerät (R) eine erste Erkennereinheit (3) zugeordnet ist, wobei das Zugangsknotengerät (C) eine zweite Erkennereinheit (13) aufweist oder dem Zugangsknotengerät (C) eine zweite Erkennereinheit zugeordnet ist, wobei das Anschlussgerät (R) derart konfiguriert ist, dass mittels der ersten Erkennereinheit und/oder mittels der zweiten Erkennereinheit (13) durch einen Vergleich der empfangenen Signalisierungsinformation mit einer vorbestimmten Referenzinformation detektiert wird, ob ein Datenübertragungsbedarf einer erhöhten Datenübertragungsrate erwartet wird,
wobei das Zugangsknotengerät (C) derart konfiguriert ist, dass die vorgegebene Datenverbindung eine teilnehmerseitig initiierte Datenverbindung ist und mittels der ersten Erkennereinheit (3) erkannt wird und/oder wobei das Anschlussgerät (R) derart konfiguriert ist, dass die vorgegebene Datenverbindung eine teilnehmerseitig terminierte Datenverbindung ist und mittels der zweiten Erkennereinheit (13) erkannt wird.

9. Zugangsknotengerät (C) zum netzseitigen Anschluss an eine DSL-Leitung (20) in einem Telekommunikationsnetz, wobei die DSL-Leitung (20) zwischen dem Zugangsknotengerät (C) und einem teilnehmerseitigen Anschlussgerät (R) zur Übertragung von Nutzdaten und Signalisierungsinformationen vorgesehen ist, wobei das Zugangsknotengerät (C), das Anschlussgerät (R) sowie die DSL-Leitung (20) alternativ in einem ersten Betriebsmodus oder in einem zweiten Betriebsmodus oder in einem dritten Betriebsmodus betreibbar ist,
wobei das Zugangsknotengerät (C), das Anschlussgerät (R) sowie die DSL-Leitung (20) im ersten Betriebsmodus eine vorgegebene erste Datenübertragungsrate aufweist,
wobei das Zugangsknotengerät (C), das Anschlussgerät (R) sowie die DSL-Leitung (20) im zweiten Betriebsmodus eine vorgegebene zweite, reduzierte Datenübertragungsrate aufweist,
wobei das Zugangsknotengerät (C), das Anschlussgerät (R) sowie die DSL-Leitung (20) im dritten Betriebsmodus zumindest teilweise ausgeschaltet sind,
wobei das Zugangsknotengerät (C) derart konfiguriert ist, dass die Einstellung des ersten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät (C), das Anschlussgerät (R) sowie die DSL-Leitung (20) im zweiten Betriebsmodus befinden und
-- das Zugangsknotengerät (C) und/oder das Anschlussgerät (R) eine Signalisierungsinformation zum Aufbau einer vorgegebenen, einen Datenübertragungsbedarf mit erhöhter Datenübertragungsrate benötigende Datenverbindung empfängt,
wobei das Zugangsknotengerät (C) derart konfiguriert ist, dass die Einstellung des ersten oder zweiten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät (C), das Anschlussgerät (R) sowie die DSL-Leitung (20) im dritten Betriebsmodus befinden und
-- das Zugangsknotengerät (C) und/oder das Anschlussgerät (R) eine Signalisierungsinformation zum Aufbau einer vorgegebenen, einen Datenübertragungsbedarf mit erhöhter Datenübertragungsrate benötigende Datenverbindung empfängt,
wobei das Anschlussgerät (R) eine erste Erkennereinheit (3) aufweist oder dem Anschlussgerät (R) eine erste Erkennereinheit (3) zugeordnet ist, wobei das Zugangsknotengerät (C) eine zweite Erkennereinheit (13) aufweist oder dem Zugangsknotengerät (C) eine zweite Erkennereinheit zugeordnet ist, wobei das Anschlussgerät (R) derart konfiguriert ist, dass mittels der ersten Erkennereinheit und/oder mittels der zweiten Erkennereinheit (13) durch einen Vergleich der empfangenen Signalisierungsinformation mit einer vorbestimmten Referenzinformation detektiert wird, ob ein Datenübertragungsbedarf einer erhöhten Datenübertragungsrate erwartet wird,
wobei das Zugangsknotengerät (C) derart konfiguriert ist, dass die vorgegebene Datenverbindung eine teilnehmerseitig initiierte Datenverbindung ist und mittels der ersten Erkennereinheit (3) erkannt wird und/oder wobei das Anschlussgerät (R) derart konfiguriert ist, dass die vorgegebene Datenverbindung eine teilnehmerseitig terminierte Datenverbindung ist und mittels der zweiten Erkennereinheit (13) erkannt wird.

10. System umfassend ein Anschlussgerät (R) zum teilnehmerseitigen Anschluss an eine DSL-Leitung (20) in einem Telekommunikationsnetz und ein Zugangsknotengerät (C) zum netzseitigen Anschluss an die DSL-Leitung (20) in einem Telekommunikationsnetz, wobei die DSL-Leitung (20) zwischen einem netzseitigen Zugangsknotengerät (C) und dem Anschlussgerät (R) zur Übertragung von Nutzdaten und Signalisierungsinformationen vorgesehen ist,
wobei das Zugangsknotengerät (C), das Anschlussgerät (R) sowie die DSL-Leitung (20) alternativ in einem ersten Betriebsmodus oder in einem zweiten Betriebsmodus oder in einem dritten Betriebsmodus betreibbar ist,
wobei das Zugangsknotengerät (C), das Anschlussgerät (R) sowie die DSL-Leitung (20) im ersten Betriebsmodus eine vorgegebene erste Datenübertragungsrate aufweist,
wobei das Zugangsknotengerät (C), das Anschlussgerät (R) sowie die DSL-Leitung (20) im zweiten Betriebsmodus eine vorgegebene zweite, reduzierte Datenübertragungsrate aufweist,
wobei das Zugangsknotengerät (C), das Anschlussgerät (R) sowie die DSL-Leitung (20) im dritten Betriebsmodus zumindest teilweise ausgeschaltet sind,
wobei das Anschlussgerät (R) und das Zugangsknotengerät (C) derart konfiguriert ist, dass die Einstellung des ersten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät (C), das Anschlussgerät (R) sowie die DSL-Leitung (20) im zweiten Betriebsmodus befinden und
-- das Zugangsknotengerät (C) und/oder das Anschlussgerät (R) eine Signalisierungsinformation zum Aufbau einer vorgegebenen, einen Datenübertragungsbedarf mit erhöhter Datenübertragungsrate benötigende Datenverbindung empfängt,
wobei das Anschlussgerät (R) und das Zugangsknotengerät (C) derart konfiguriert ist, dass die Einstellung des ersten oder zweiten Betriebsmodus in Abwesenheit eines momentan vorliegenden Datenübertragungsbedarfs einer erhöhten Datenübertragungsrate für den Fall vorgesehen ist, dass
-- sich das Zugangsknotengerät (C), das Anschlussgerät (R) sowie die DSL-Leitung (20) im dritten Betriebsmodus befinden und
-- das Zugangsknotengerät (C) und/oder das Anschlussgerät (R) eine Signalisierungsinformation zum Aufbau einer vorgegebenen, einen Datenübertragungsbedarf mit erhöhter Datenübertragungsrate benötigende Datenverbindung empfängt,
wobei das Anschlussgerät (R) eine erste Erkennereinheit (3) aufweist oder dem Anschlussgerät (R) eine erste Erkennereinheit (3) zugeordnet ist, wobei das Zugangsknotengerät (C) eine zweite Erkennereinheit (13) aufweist oder dem Zugangsknotengerät (C) eine zweite Erkennereinheit zugeordnet ist, wobei das Anschlussgerät (R) derart konfiguriert ist, dass mittels der ersten Erkennereinheit und/oder mittels der zweiten Erkennereinheit (13) durch einen Vergleich der empfangenen Signalisierungsinformation mit einer vorbestimmten Referenzinformation detektiert wird, ob ein Datenübertragungsbedarf einer erhöhten Datenübertragungsrate erwartet wird,
wobei das Zugangsknotengerät (C) derart konfiguriert ist, dass die vorgegebene Datenverbindung eine teilnehmerseitig initiierte Datenverbindung ist und mittels der ersten Erkennereinheit (3) erkannt wird und/oder wobei das Anschlussgerät (R) derart konfiguriert ist, dass die vorgegebene Datenverbindung eine teilnehmerseitig terminierte Datenverbindung ist und mittels der zweiten Erkennereinheit (13) erkannt wird.

11. Programm umfassend einen computerlesbaren Programmcode zur Durchführung des Verfahrens gemäß Anspruch 1 auf einem Anschlussgerät (R) gemäß Anspruch 8 oder einem Zugangsknotengerät (C) gemäß Anspruch 9 oder einem System gemäß Anspruch 10.

12. Computerprogrammprodukt umfassend ein Programm nach Anspruch 11.

## Claims

1. Method for operating a DSL (digital subscriber line) (20) in a telecommunications network, wherein the DSL (20) is provided between a network-side access node device (C) and a subscriber-side connection device (R) for transfer of user data and signalling information, wherein the access node device (C), the connection device (R) and the DSL (20) can be operated alternatively in a first operating mode or in a second operating mode or in a third operating mode, wherein, in the first operating mode, the access node device (C), the connection device (R) and the DSL (20) comprise a preset first data transfer rate,
wherein, in the second operating mode, the access node device (C), the connection device (R) and the DSL (20) comprise a preset second reduced data transfer rate, wherein, in the third operating mode, the access node device (C), the connection device (R) and the DSL (20) are at least partially switched off,
wherein the setting of the first operating mode in the absence of a momentarily present data transfer requirement of an increased data transfer rate is provided for the case where
- the access node device (C) and the connection device (R) and the DSL (20) are in the second operating mode and
- the access node device (C) and/or the connection device (R) receives an item of signalling information for establishing a preset data connection requiring a data transfer requirement with an increased data transfer rate,
wherein the setting of the first or second operating mode in the absence of a momentarily present data transfer requirement of an increased data transfer rate is provided for the case where
- the access node device (C), the connection device (R) and the DSL (20) are in the third operating mode and
- the access node device (C) and/or the connection device (R) receives an item of signalling information for establishing a preset data connection requiring a data transfer requirement with an increased data transfer rate,
wherein the connection device (R) comprises a first detector unit (3) or the connection device (R) is allocated a first detector unit (3), wherein the access node device (C) comprises a second detector unit (13) or the access node device (C) is allocated a second detector unit, wherein the first detector unit and/or the second detector unit (13) use a comparison of the received signalling information with an item of predetermined reference information to detect whether a data transfer requirement of an increased data transfer rate is expected,
wherein the preset data connection is a subscriber side-initiated data connection and is detected by means of the first detector unit (3) and/or wherein the preset data connection is a subscriber side-terminated data connection and is detected by means of the second detector unit (13).

2. Method as claimed in claim 1, **characterised in that** the setting of the of the first operating mode in the absence of a momentarily present data transfer requirement of an increased data transfer rate takes place exclusively of the second operating mode.

3. Method as claimed in any one of the preceding claims, **characterised in that** the preset data connection is a subscriber side-initiated data connection or a subscriber side-terminated data connection and both cases of the preset data connection are detected by means of the first detector unit (3) when the access node device (C), the connection device (R) and the DSL (20) are in the first or second operating mode.

4. Method as claimed in any one of the preceding claims, **characterised in that** the preset data connection is a subscriber side-initiated data connection or a subscriber side-terminated data connection and both cases of the preset data connection are detected by means of the second detector unit (13) when the access node device (C), the connection device (R) and the DSL (20) are in the first or second operating mode.

5. Method as claimed in any one of the preceding claims, **characterised in that** the connection device (R) comprises a first port reflector functionality and/or the access node device (C) comprises a second port reflector functionality.

6. Method as claimed in any one of the preceding claims, **characterised in that** the reference signalling includes an SIP (session initiation protocol) invite message of a VoIP (voice over IP) connection to be established.

7. Method as claimed in any one of the preceding claims, **characterised in that** the setting of the second or third operating mode is provided for the case where
- the access node device (C), the connection device (R) and the DSL (20) are in the first operating mode and
- during a preset time period, no data transfer requirement or a comparably low data transfer requirement has been detected.

8. Connection device (R) for subscriber-side connection to a DSL (20) in a telecommunications network, wherein the DSL (20) is provided between a network-side access node device (C) and the connection device (R) for transfer of user data and signalling information,
wherein the access node device (C), the connection device (R) and the DSL (20) can be operated alternatively in a first operating mode or in a second operating mode or in a third operating mode,
wherein, in the first operating mode, the access node device (C), the connection device (R) and the DSL (20) comprise a preset first data transfer rate, wherein, in the second operating mode, the access node device (C), the connection device (R) and the DSL (20) comprise a preset second reduced data transfer rate, wherein, in the third operating mode, the access node device (C), the connection device (R) and the DSL (20) are at least partially switched off,
wherein the connection device (R) is configured in such a way that the setting of the first operating mode in the absence of a momentarily present data transfer requirement of an increased data transfer rate is provided for the case where
- the access node device (C), the connection device (R) and the DSL (20) are in the second operating mode and
- the access node device (C) and/or the connection device (R) receives an item of signalling information for establishing a preset data connection requiring a data transfer requirement with an increased data transfer rate,
wherein the connection device (R) is configured in such a way that the setting of the first or second operating mode in the absence of a momentarily present data transfer requirement of an increased data transfer rate is provided for the case where
- the access node device (C), the connection device (R) and the DSL (20) are in the third operating mode and
- the access node device (C) and/or the connection device (R) receives an item of signalling information for establishing a preset data connection requiring a data transfer requirement with an increased data transfer rate,
wherein the connection device (R) comprises a first detector unit (3) or the connection device (R) is allocated a first detector unit (3), wherein the access node device (C) comprises a second detector unit (13) or the access node device (C) is allocated a second detector unit, wherein the connection device (R) is configured in such a way that the first detector unit and/or the second detector unit (13) use a comparison of the received signalling information with an item of predetermined reference information to detect whether a data transfer requirement of an increased data transfer rate is expected,
wherein the access node device (C) is configured in such a way that the preset data connection is a subscriber side-initiated data connection and is detected by means of the first detector unit (3) and/or wherein connection device (R) is configured in such a way that the preset data connection is a subscriber side-terminated data connection and is detected by means of the second detector unit (13).

9. Access node device (C) for network-side connection to a DSL (20) in a telecommunications network, wherein the DSL (20) is provided between the access node device (C) and a subscriber-side connection device (R) for transfer of user data and signalling information,
wherein the access node device (C), the connection device (R) and the DSL (20) can be operated alternatively in a first operating mode or in a second operating mode or in a third operating mode,
wherein, in the first operating mode, the access node device (C), the connection device (R) and the DSL (20) comprise a preset first data transfer rate, wherein, in the second operating mode, the access node device (C), the connection device (R) and the DSL (20) comprise a preset second reduced data transfer rate, wherein, in the third operating mode, the access node device (C), the connection device (R) and the DSL (20) are at least partially switched off,
wherein access node device (C) is configured in such a way that the setting of the first operating mode in the absence of a momentarily present data transfer requirement of an increased data transfer rate is provided for the case where
- the access node device (C), the connection device (R) and the DSL (20) are in the second operating mode and
- the access node device (C) and/or the connection device (R) receives an item of signalling information for establishing a preset data connection requiring a data transfer requirement with an increased data transfer rate,
wherein the access node device (C) is configured in such a way that the setting of the first or second operating mode in the absence of a momentarily present data transfer requirement of an increased data transfer rate is provided for the case where
- the access node device (C), the connection device (R) and the DSL (20) are in the third operating mode and
- the access node device (C) and/or the connection device (R) receives an item of signalling information for establishing a preset data connection requiring a data transfer requirement with an increased data transfer rate,
wherein the connection device (R) comprises a first detector unit (3) or the connection device (R) is allocated a first detector unit (3), wherein the access node device (C) comprises a second detector unit (13) or the access node device (C) is allocated a second detector unit, wherein the connection device (R) is configured in such a way that the first detector unit and/or the second detector unit (13) use a comparison of the received signalling information with an item of predetermined reference information to detect whether a data transfer requirement of an increased data transfer rate is expected,
wherein the access node device (C) is configured in such a way that the preset data connection is a subscriber side-initiated data connection and is detected by means of the first detector unit (3) and/or wherein the connection device (R) is configured in such a way that the preset data connection is a subscriber side-terminated data connection and is detected by means of the second detector unit (13).

10. System comprising a connection device (R) for subscriber-side connection to a DSL (20) in a telecommunications network and an access node device (C) for network-side connection to the DSL (20) in a telecommunications network, wherein the DSL (20) is provided between a network-side access node device (C) and the connection device (R) for transfer of user data and signalling information,
wherein the access node device (C), the connection device (R) and the DSL (20) can be operated alternatively in a first operating mode or in a second operating mode or in a third operating mode,
wherein, in the first operating mode, the access node device (C), the connection device (R) and the DSL (20) comprise a preset first data transfer rate, wherein, in the second operating mode, the access node device (C), the connection device (R) and the DSL (20) comprise a preset second reduced data transfer rate, wherein, in the third operating mode, the access node device (C), the connection device (R) and the DSL (20) are at least partially switched off,
wherein the connection device (R) and the access node device (C) are configured in such a way that the setting of the first operating mode in the absence of a momentarily present data transfer requirement of an increased data transfer rate is provided for the case where
- the access node device (C), the connection device (R) and the DSL (20) are in the second operating mode and
- the access node device (C) and/or the connection device (R) receives an item of signalling information for establishing a preset data connection requiring a data transfer requirement with an increased data transfer rate,
wherein the connection device (R) and the access node device (C) are configured in such a way that the setting of the first or second operating mode in the absence of a momentarily present data transfer requirement of an increased data transfer rate is provided for the case where
- the access node device (C), the connection device (R) and the DSL (20) are in the third operating mode and
- the access node device (C) and/or the connection device (R) receives an item of signalling information for establishing a preset data connection requiring a data transfer requirement with an increased data transfer rate,
wherein the connection device (R) comprises a first detector unit (3) or the connection device (R) is allocated a first detector unit (3), wherein the access node device (C) comprises a second detector unit (13) or the access node device (C) is allocated a second detector unit, wherein the connection device (R) is configured in such a way that the first detector unit and/or the second detector unit (13) use a comparison of the received signalling information with an item of predetermined reference information to detect whether a data transfer requirement of an increased data transfer rate is expected,
wherein the access node device (C) is configured in such a way that preset data connection is a subscriber side-initiated data connection and is detected by means of the first detector unit (3) and/or wherein connection device (R) is configured in such a way that the preset data connection is a subscriber side-terminated data connection and is detected by means of the second detector unit (13).

11. Program comprising a computer readable program code for carrying out the method as claimed in claim 1 on a connection device (R) as claimed in claim 8 or an access node device (C) as claimed in claim 9 or a system as claimed in claim 10.

12. Computer program product comprising a program as claimed in claim 11.

## Revendications

1. Procédé de fonctionnement d'une ligne DSL, digital subscriber line, (20) dans un réseau de télécommunication, la ligne DSL (20) étant prévue entre un noeud d'accès (C) côté réseau et un appareil de raccordement (R) côté abonné pour la transmission de données utiles et d'informations de signalisation, le noeud d'accès (C), l'appareil de raccordement (R) ainsi que la ligne DSL (20) pouvant fonctionner alternativement dans un premier mode de fonctionnement ou dans un deuxième mode de fonctionnement ou dans un troisième mode de fonctionnement,
le noeud d'accès (C), l'appareil de raccordement (R) ainsi que la ligne DSL (20) comportant dans le premier mode de fonctionnement un premier taux de transmission de données prédéfini,
le noeud d'accès (C), l'appareil de raccordement (R) ainsi que la ligne DSL (20) comportant dans le deuxième mode de fonctionnement un second taux de transmission de données prédéfini réduit,
le noeud d'accès (C), l'appareil de raccordement (R) ainsi que la ligne DSL (20) étant au moins partiellement désactivés dans le troisième mode de fonctionnement,
le réglage du premier mode de fonctionnement étant prévu en l'absence d'un besoin actuellement existant de transmission de données à un taux de transmission de données élevé pour le cas où
- le noeud d'accès (C) et l'appareil de raccordement (R) ainsi que la ligne DSL (20) se trouvent dans le deuxième mode de fonctionnement et
- le noeud d'accès (C) et/ou l'appareil de raccordement (R) reçoit une information de signalisation pour l'établissement d'une liaison de données prédéfinie, nécessitant un besoin de transmission de données à un taux de transmission de données élevé,
le réglage du premier ou deuxième mode de fonctionnement étant prévu en l'absence d'un besoin actuellement existant de transmission de données à un taux de transmission de données élevé pour le cas où
- le noeud d'accès (C), l'appareil de raccordement (R) ainsi que la ligne DSL (20) se trouvent dans le troisième mode de fonctionnement et
- le noeud d'accès (C) et/ou l'appareil de raccordement (R) reçoit une information de signalisation pour l'établissement d'une liaison de données prédéfinie, nécessitant un besoin de transmission de données à un taux de transmission de données élevé,
l'appareil de raccordement (R) comportant une première unité de reconnaissance (3) ou une première unité de reconnaissance (3) étant associée à l'appareil de raccordement (R), le noeud d'accès (C) comportant une seconde unité de reconnaissance (13) ou une seconde unité de reconnaissance étant associée au noeud d'accès (C), la première unité de reconnaissance et/ou la seconde unité de reconnaissance (13) permettant de détecter par une comparaison de l'information de signalisation reçue avec une information de référence prédéfinie, si un besoin de transmission de données à un taux de transmission de données élevé est attendu,
la liaison de données prédéfinie étant une liaison de données initiée côté abonné et étant reconnue au moyen de la première unité de reconnaissance (3) et/ou la liaison de données prédéfinie étant une liaison de données reçue côté abonné et étant reconnue au moyen de la seconde unité de reconnaissance (13).

2. Procédé selon la revendication 1, **caractérisé en ce que** le réglage du premier mode de fonctionnement en l'absence d'un besoin actuellement existant de transmission de données à un taux de transmission de données élevé est effectué uniquement depuis le deuxième mode de fonctionnement.

3. Procédé selon l'une des revendications précédentes, **caractérisé en ce que** la liaison de données prédéfinie est une liaison de données initiée côté abonné ou une liaison de données reçue côté abonné et les deux cas de liaison de données prédéfinie sont reconnus au moyen de la première unité de reconnaissance (3), quand le noeud d'accès (C), l'appareil de raccordement (R) ainsi que la ligne DSL (20) se trouvent dans le premier ou le deuxième mode de fonctionnement.

4. Procédé selon l'une des revendications précédentes, **caractérisé en ce que** la liaison de données prédéfinie est une liaison de données initiée côté abonné ou une liaison de données reçue côté abonné et les deux cas de liaison de données prédéfinie sont reconnus au moyen de la seconde unité de reconnaissance (13), quand le noeud d'accès (C), l'appareil de raccordement (R) ainsi que la ligne DSL (20) se trouvent dans le premier ou le deuxième mode de fonctionnement.

5. Procédé selon l'une des revendications précédentes, **caractérisé en ce que** l'appareil de raccordement (R) comporte une première fonction de réflecteur de port et/ou le noeud d'accès (C) comporte une seconde fonction de réflecteur de port.

6. Procédé selon l'une des revendications précédentes, **caractérisé en ce que** la signalisation de référence comprend un message SIP invite, Session Initiation Protocol invite, d'une liaison VoIP, Voice over IP, à établir.

7. Procédé selon l'une des revendications précédentes, **caractérisé en ce que** le réglage du deuxième ou troisième mode de fonctionnement est prévu pour le cas où
- le noeud d'accès (C), l'appareil de raccordement (R) ainsi que la ligne DSL (20) se trouvent dans le premier mode de fonctionnement et
- aucun besoin de transmission de données ou un besoin de transmission de données comparativement faible a été détecté pendant une durée prédéfinie.

8. Appareil de raccordement (R) pour le raccordement côté abonné à une ligne DSL (20) dans un réseau de télécommunication, la ligne DSL (20) étant prévue entre un noeud d'accès (C) côté réseau et l'appareil de raccordement (R) pour la transmission de données utiles et d'informations de signalisation,
le noeud d'accès (C), l'appareil de raccordement (R) ainsi que la ligne DSL (20) pouvant fonctionner alternativement dans un premier mode de fonctionnement ou dans un deuxième mode de fonctionnement ou dans un troisième mode de fonctionnement,
le noeud d'accès (C), l'appareil de raccordement (R) ainsi que la ligne DSL (20) comportant dans le premier mode de fonctionnement un premier taux de transmission de données prédéfini,
le noeud d'accès (C), l'appareil de raccordement (R) ainsi que la ligne DSL (20) comportant dans le deuxième mode de fonctionnement un second taux de transmission de données prédéfini réduit,
le noeud d'accès (C), l'appareil de raccordement (R) ainsi que la ligne DSL (20) étant au moins partiellement désactivés dans le troisième mode de fonctionnement, l'appareil de raccordement (R) étant configuré de telle manière que le réglage du premier mode de fonctionnement est prévu en l'absence d'un besoin actuellement existant de transmission de données à un taux de transmission de données élevé pour le cas où
- le noeud d'accès (C), l'appareil de raccordement (R) ainsi que la ligne DSL (20) se trouvent dans le deuxième mode de fonctionnement et
- le noeud d'accès (C) et/ou l'appareil de raccordement (R) reçoit une information de signalisation pour l'établissement d'une liaison de données prédéfinie, nécessitant un besoin de transmission de données à un taux de transmission de données élevé,
l'appareil de raccordement (R) étant configuré de telle manière que le réglage du premier ou deuxième mode de fonctionnement est prévu en l'absence d'un besoin actuellement existant de transmission de données à un taux de transmission de données élevé pour le cas où
- le noeud d'accès (C), l'appareil de raccordement (R) ainsi que la ligne DSL (20) se trouvent dans le troisième mode de fonctionnement et
- le noeud d'accès (C) et/ou l'appareil de raccordement (R) reçoit une information de signalisation pour l'établissement d'une liaison de données prédéfinie, nécessitant un besoin de transmission de données à un taux de transmission de données élevé,
l'appareil de raccordement (R) comportant une première unité de reconnaissance (3) ou une première unité de reconnaissance (3) étant associée à l'appareil de raccordement (R), le noeud d'accès (C) comportant une seconde unité de reconnaissance (13) ou une seconde unité de reconnaissance étant associée au noeud d'accès (C), l'appareil de raccordement (R) étant configuré de telle manière que la première unité de reconnaissance et/ou la seconde unité de reconnaissance (13) permet de détecter par une comparaison de l'information de signalisation reçue avec une information de référence prédéfinie, si un besoin de transmission de données à un taux de transmission de données élevé est attendu,
le noeud d'accès (C) étant configuré de telle manière que la liaison de données prédéfinie est une liaison de données initiée côté abonné et est reconnue au moyen de la première unité de reconnaissance (3) et/ou l'appareil de raccordement (R) étant configuré de telle manière que la liaison de données prédéfinie est une liaison de données reçue côté abonné et est reconnue au moyen de la seconde unité de reconnaissance (13).

9. Noeud d'accès (C) destiné au raccordement côté réseau à une ligne DSL (20) dans un réseau de télécommunication, la ligne DSL (20) étant prévue entre le noeud d'accès (C) et un appareil de raccordement (R) côté abonné pour la transmission de données utiles et d'informations de signalisation, le noeud d'accès (C), l'appareil de raccordement (R) ainsi que la ligne DSL (20) pouvant fonctionner alternativement dans un premier mode de fonctionnement ou dans un deuxième mode de fonctionnement ou dans un troisième mode de fonctionnement,
le noeud d'accès (C), l'appareil de raccordement (R) ainsi que la ligne DSL (20) comportant dans le premier mode de fonctionnement un premier taux de transmission de données prédéfini,
le noeud d'accès (C), l'appareil de raccordement (R) ainsi que la ligne DSL (20) comportant dans le deuxième mode de fonctionnement un second taux de transmission de données prédéfini réduit,
le noeud d'accès (C), l'appareil de raccordement (R) ainsi que la ligne DSL (20) étant au moins partiellement désactivés dans le troisième mode de fonctionnement,
le noeud d'accès (C) étant configuré de telle manière que le réglage du premier mode de fonctionnement est prévu en l'absence d'un besoin actuellement existant de transmission de données à un taux de transmission de données élevé pour le cas où
- le noeud d'accès (C), l'appareil de raccordement (R) ainsi que la ligne DSL (20) se trouvent dans le deuxième mode de fonctionnement et
- le noeud d'accès (C) et/ou l'appareil de raccordement (R) reçoit une information de signalisation pour l'établissement d'une liaison de données prédéfinie, nécessitant un besoin de transmission de données à un taux de transmission de données élevé,
le noeud d'accès (C) étant configuré de telle manière que le réglage du premier ou deuxième mode de fonctionnement est prévu en l'absence d'un besoin actuellement existant de transmission de données à un taux de transmission de données élevé pour le cas où
- le noeud d'accès (C), l'appareil de raccordement (R) ainsi que la ligne DSL (20) se trouvent dans le troisième mode de fonctionnement et
- le noeud d'accès (C) et/ou l'appareil de raccordement (R) reçoit une information de signalisation pour l'établissement d'une liaison de données prédéfinie, nécessitant un besoin de transmission de données à un taux de transmission de données élevé,
l'appareil de raccordement (R) comportant une première unité de reconnaissance (3) ou une première unité de reconnaissance (3) étant associée à l'appareil de raccordement (R), le noeud d'accès (C) comportant une seconde unité de reconnaissance (13) ou une seconde unité de reconnaissance étant associée au noeud d'accès (C), l'appareil de raccordement (R) étant configuré de telle manière que la première unité de reconnaissance et/ou la seconde unité de reconnaissance (13) permet de détecter par une comparaison de l'information de signalisation reçue avec une information de référence prédéfinie, si un besoin de transmission de données à un taux de transmission de données élevé est attendu,
le noeud d'accès (C) étant configuré de telle manière que la liaison de données prédéfinie est une liaison de données initiée côté abonné et est reconnue au moyen de la première unité de reconnaissance (3) et/ou l'appareil de raccordement (R) étant configuré de telle manière que la liaison de données prédéfinie est une liaison de données reçue côté abonné et est reconnue au moyen de la seconde unité de reconnaissance (13).

10. Système comprenant un appareil de raccordement (R) pour le raccordement côté abonné à une ligne DSL (20) dans un réseau de télécommunication et un noeud d'accès (C) pour le raccordement côté réseau à la ligne DSL (20) dans un réseau de télécommunication, la ligne DSL (20) étant prévue entre un noeud d'accès (C) côté réseau et l'appareil de raccordement (R) pour la transmission de données utiles et d'informations de signalisation,
le noeud d'accès (C), l'appareil de raccordement (R) ainsi que la ligne DSL (20) pouvant fonctionner alternativement dans un premier mode de fonctionnement ou dans un deuxième mode de fonctionnement ou dans un troisième mode de fonctionnement,
le noeud d'accès (C), l'appareil de raccordement (R) ainsi que la ligne DSL (20) comportant dans le premier mode de fonctionnement un premier taux de transmission de données prédéfini,
le noeud d'accès (C), l'appareil de raccordement (R) ainsi que la ligne DSL (20) comportant dans le deuxième mode de fonctionnement un second taux de transmission de données prédéfini réduit,
le noeud d'accès (C), l'appareil de raccordement (R) ainsi que la ligne DSL (20) étant au moins partiellement désactivés dans le troisième mode de fonctionnement, l'appareil de raccordement (R) et le noeud d'accès (C) étant configurés de telle manière que le réglage du premier mode de fonctionnement est prévu en l'absence d'un besoin actuellement existant de transmission de données à un taux de transmission de données élevé pour le cas où
- le noeud d'accès (C), l'appareil de raccordement (R) ainsi que la ligne DSL (20) se trouvent dans le deuxième mode de fonctionnement et
- le noeud d'accès (C) et/ou l'appareil de raccordement (R) reçoit une information de signalisation pour l'établissement d'une liaison de données prédéfinie, nécessitant un besoin de transmission de données à un taux de transmission de données élevé,
l'appareil de raccordement (R) et le noeud d'accès (C) étant configurés de telle manière que le réglage du premier ou deuxième mode de fonctionnement est prévu en l'absence d'un besoin actuellement existant de transmission de données à un taux de transmission de données élevé pour le cas où
- le noeud d'accès (C), l'appareil de raccordement (R) ainsi que la ligne DSL (20) se trouvent dans le troisième mode de fonctionnement et
- le noeud d'accès (C) et/ou l'appareil de raccordement (R) reçoit une information de signalisation pour l'établissement d'une liaison de données prédéfinie, nécessitant un besoin de transmission de données à un taux de transmission de données élevé,
l'appareil de raccordement (R) comportant une première unité de reconnaissance (3) ou une première unité de reconnaissance (3) étant associée à l'appareil de raccordement (R), le noeud d'accès (C) comportant une seconde unité de reconnaissance (13) ou une seconde unité de reconnaissance étant associée au noeud d'accès (C), l'appareil de raccordement (R) étant configuré de telle manière que la première unité de reconnaissance et/ou la seconde unité de reconnaissance (13) permet de détecter par une comparaison de l'information de signalisation reçue avec une information de référence prédéfinie, si un besoin de transmission de données à un taux de transmission de données élevé est attendu,
le noeud d'accès (C) étant configuré de telle manière que la liaison de données prédéfinie est une liaison de données initiée côté abonné et est reconnue au moyen de la première unité de reconnaissance (3) et/ou l'appareil de raccordement (R) étant configuré de telle manière que la liaison de données prédéfinie est une liaison de données reçue côté abonné et est reconnue au moyen de la seconde unité de reconnaissance (13).

11. Programme comprenant un code de programme lisible par ordinateur pour exécuter le procédé selon la revendication 1 sur un appareil de raccordement (R) selon la revendication 8 ou un noeud d'accès (C) selon la revendication 9 ou un système selon la revendication 10.

12. Produit programme informatique comprenant un programme selon la revendication 11.
